(19) Europäisches Patentamt
European Patent Office
Office européen des brevets

(11) Publication number: 0 245 516 A1

(12) # EUROPEAN PATENT APPLICATION

published in accordance with Art. 158(3) EPC

(21) Application number: 86906928.6

(22) Date of filing: 14.11.86

Data of the international application taken as a basis:

(86) International application number: PCT/JP86/00580

(87) International publication number: WO87/02904 (21.05.87 87/11)

(51) Int. Cl.³: B 01 D 13/00
B 01 D 13/04

(30) Priority: 14.11.85 JP 253697/85
26.08.86 JP 197987/86
30.09.86 JP 229559/86
30.09.86 JP 229560/86

(43) Date of publication of application: 19.11.87 Bulletin 87/47

(84) Designated Contracting States: AT BE CH DE FR GB IT LI LU NL SE

(71) Applicant: SAGAMI CHEMICAL RESEARCH CENTER
4-5, Marunouchi 1-chome
Chiyoda-ku Tokyo 100(JP)

(72) Inventor: MATSUI, Kiyohide
4-6-5, Misono
Sagamihara-shi Kanagawa 228(JP)

(72) Inventor: NAGASE, Yu
3-16-203, Sakae-cho
Sagamihara-shi Kanagawa 228(JP)

(72) Inventor: ISHIHARA, Kazuhiko
1-9-1-303, Minamidai
Sagamihara-shi Kanagawa 228(JP)

(72) Inventor: MORI, Shigehiro
3-16-104, Sakae-cho
Sagamihara-shi Kanagawa 228(JP)

(74) Representative: Myerscough, Philip Boyd et al,
J.A.Kemp & Co. 14, South Square Gray's Inn
London, WC1R 5EU(GB)

(54) **POLYMER MEMBRANE FOR SEPARATING LIQUID MIXTURE.**

(57) A polymer membrane for use in separating a liquid mixture. It is prepared from a poly-(disubstituted acetylene)/polyorganosiloxane graft copolymer comprising the repeating units of formula (I), (wherein A represents alkyl, substituted alkyl, phenyl, substituted phenyl or formula (II), X represents H or formula (III), with A and X being optionally different for individual repeating units, provided that Y represents an oxygen atom or a divalent organic group, Z represents a polyorganosiloxane chain, and $R^1$ to $R^8$ may be the same or different and each represents alkyl, substituted alkyl, phenyl or substituted phenyl), with the molar ratio of the repeating units of poly(disubstituted acetylene) forming the main chain to those of polyorganosiloxane forming the side chain being 99/1 to 5/95, and having a molecular weight of at least 10,000. This membrane is excellent in both liquid permeability and liquid separating ability, thus being suited for separating a liquid mixture by pervaporation.

EP 0 245 516 A1

TITLE MODIFIED
see front page



SPECIFICATION

# POLYMERIC MEMBRANE FOR SEPARATION OF LIQUID MIXTURE

## Technological Field

This invention relates to a polymeric membrane for use in separating a liquid mixture. More specifically, this invention relates to a liquid separating membrane which has excellent liquid permeability and separability and is especially suitable for separation of a liquid mixture by pervaporation.

## Background Technology

Pervaporation is a method by which a liquid mixture is supplied into a space on one side of a nonporous polymeric membrane and a space on the other side of the membrane is evacuated and maintained under reduced pressure or the vapor pressure on the other side is decreased by passing a carrier gas such as an inert gas, whereby a component that easily permeates through the membrane is preferentially separated and concentrated. This membrane separation method is effective for separation of a liquid mixture which is not easy to separate by a conventional distillation method, for example an azeotropic mixture, a mixture of components having close boiling points, an isomeric mixture, or a liquid susceptible to degeneration by heating. It is particularly effective for separation of an alcohol from an aqueous alcohol solution of a low concentration obtained by fermenting a biomass resource.

The history of studies on a separation process for liquid mixtures by pervaporation utilizing nonporous polymeric membranes is old, and much research has been done mainly on mixtures which are difficult to separate in vapors. For example, Binning studied separation of an azeotropic mixture using a polyvinyl alcohol membrane (U. S. Patent No. 2,953,502). Separation of a water-formaldehyde mixture using a styrene/acrylic acid copolymer membrane was also reported (U. S. Patent No.

4,035,291). These polymeric membranes, however, have no sufficient permeability and separability and have not gained commercial acceptance.

In recent years, from the standpoint of energy saving, attention has been directed to the utilization of pervaporation as a separation process which makes up for, or supersedes, the conventional distillation method.

Particularly, when it is desired to take out an organic component in a high concentration from an aqueous solution containing a small amount of the organic component, such as an aqueous solution obtained by alcohol fermentation of a biomass, the distillation method is economically disadvantageous and the pervaporation method is considered to be most desirable. As separation membranes used to separate a water-alcohol mixture by pervaporation, there have been proposed polymeric membranes, for example membranes of cellulose acetate, cellophane, polyamides, N-vinylpyrrolidone graft polymers or polyvinyl pyridine, and fluorine-containing cation exchange membranes (Japanese Laid-Open Patent Publication No. 84005/1983). These polymeric membranes permit selective permeation of water and suitable for removal of water from a mixture containing a small amount of water such as an azeotropic mixture. However, they are unsuitable for separation of an alcohol from a fermentation liquor containing only about 8 to 15% of the alcohol. A few polymeric membranes such as a polyethylene, polypropylene or silicone rubber membrane (Japanese Laid-Open Patent Publication No. 136905/1982) are known as polymeric membranes selectively permeable to alcohols. These polymeric membranes have insufficient film-forming ability, permeability and selectivity and have not come into commercial acceptance. The present inventors found that a graft copolymer composed of a main chain of polystyrene and a side chain of a polyfluoroalkyl acrylate can be formed into a membrane for separating an alcohol

selectively from a water-alcohol mixture [Polymer Preprints, Japan, 34, No. 7, 1841 (1985)]. This membrane has some problem in that the velocity of permeation of an aqueous alcohol solution having a low concentration is slightly low. In recent years, synthesis of poly(disubstituted acetylenes) became possible and poly(trimethylsilylpropyne), as one example thereof, can be a material for a polymeric membrane that permits preferential permeation of an alcohol as is the case with a silicone rubber [Makromol., Chem., Rapid, Commun., 7, 43 (1986)]. It aroused interest because it far surpasses the silicone rubber in regard to membrane strength. The poly(trimethylsilylpropyne) membrane has nearly the same selectivity and the amount of liquid permeation per unit membrane thickness as the silicone rubber membrane. In particular, in regard to selectivity, this membrane cannot be said to be sufficient for concentrating an alcohol of a low concentration (see Comparative Example). It was reported that membranes formed from other poly(disubstituted acetylenes) such as poly(2-octyne), poly(1-chloro-1-octyne), poly(1-phenylpropyne) and poly(chlorophenylacetylene) likewise have an excellent membrane strength, but when a water-alcohol mixture is applied thereto, they permit preferential permeation of water [Polymer Preprints, Japan, 35, No. 3, 447 (1986)].

The present invention is to remedy the defects of the aforesaid conventional liquid separating membranes by using a polymeric membrane which permits excellent permeation and separation of a liquid mixture and has high mechanical strength. It provides a separating membrane which very efficiently separates liquid mixtures, particularly water-organic liquid mixtures.

**Disclosure of the Invention**

The present inventors have made extensive investigations in order to obtain a novel membrane material which has high liquid permeability and higher selectivity

for alcohol while retaining the excellent membrane strength of the aforesaid poly(disubstituted acetylenes), and consequently found that a membrane composed of a poly(disubstituted acetylene)/polyorganosiloxane graft copolymer obtained by introducing polysiloxane chains into poly(disubstituted acetylene) has excellent membrane strength and high liquid permeability and unlike the starting poly(disubstituted acetylene), has very good alcohol selectivity. This finding has led to the present invention.

According to this invention, there is provided a polymeric membrane for separation of a liquid mixture, said membrane being formed from a poly(disubstituted acetylene)/polyorganosiloxane graft copolymer having a molecular weight of at least 10,000 and composed of repeating units of the general formula

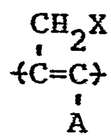 ..... (I)

wherein A represents an alkyl group, a substituted alkyl group, a phenyl group, a substituted phenyl group, or a group of the formula

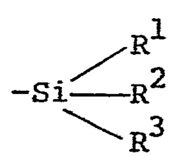 ,

X represents a hydrogen atom or a group of the formla

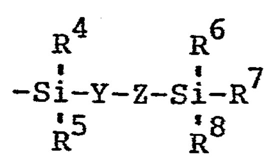 ,

A and X may vary from unit to unit, Y represents an oxygen atom or a divalent organic group, Z

represents a polyorganosiloxane chain, and $R^1$ through $R^8$ are identical or different and each represents an alkyl group, a substituted alkyl group, a phenyl group or a substituted phenyl group,

the mole ratio of the repeating units of the poly(disubstituted acetylene) in the main chain to the repeating units of the polyorganosiloxane in the side chain being from 99:1 to 5:95.

Examples of the divalent organic group in the definition of Y are substituted or unsubstituted polymethylene groups (having at least 2 carbon atoms), a phenylenepolymethylene group, and a group represented by 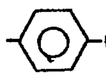$-O-CH_2CH_2CH_2-$. The polyorganosiloxane chain represented by Z is a polysiloxane chain whose repeating units are represented by the general formula

$$\left( \begin{array}{c} R^9 \\ | \\ Si-O \\ | \\ R^{10} \end{array} \right) \quad \ldots\ldots \text{(II)}$$

wherein $R^9$ and $R^{10}$ are identical or different and each represents an alkyl group, a substituted alkyl group, a phenyl group or a substituted phenyl group, and they may differ from unit to unit.

The poly(disubstituted acetylene)/polyorganosiloxane graft copolymer composed of the repeating units of general formula (I) can be synthesized by reacting a poly(disubstituted acetylene) composed of repeating units of the general formula

$$\left( \begin{array}{c} CH_3 \\ | \\ C=C \\ | \\ A \end{array} \right) \quad \ldots\ldots \text{(III)}$$

wherein A represents an alkyl group, a substituted alkyl group, a phenyl group, a substituted phenyl group, or a group of the formula

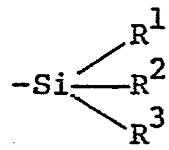 ,

and may vary from unit to unit,

wth a strong base, reacting the product with a cyclosiloxane compound represented by the general formula

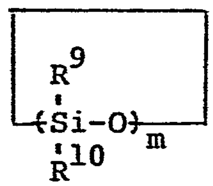 ..... (IV)

wherein $R^9$ and $R^{10}$ are as defined hereinabove, and m is an integer of 3 to 6,

and then stopping the reaction by adding a triorganohalogenosilane compound represented by the general formula

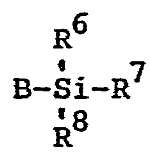 ..... (V)

wherein B represents a halogen atom, and $R^6$ to $R^8$ are as defined hereinabove.

It can also be synthesized by reacting the poly(disubstituted acetylene) composed of the repeating units of general formula (III) above with a strong acid, and reacting the product with a polyorganosiloxane with one reactive end represented by the general formula

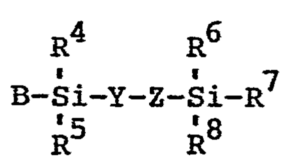 ..... (VI)

wherein B represents a halogen atom, and $R^4$ to $R^8$, Y and Z are as defined above.

Examples of the starting poly(disubstituted acetylene) composed of the repeating units of general formula (III) include poly(2-hexyne), poly(4-methyl-2-pentyne), poly(4-methyl-2-hexyne), poly(2-octyne), poly-(5-methyl-2-octyne), poly(2-decyne), poly(1-phenylpropyne), poly(1-pentafluorophenylpropyne), poly(1-trimethylsilylpropyne), poly[1-(ethyldimethylsilyl)-propyne], poly[1-(triethylsilyl)propyne], poly[1-(3,3,3-trifluoropropyldimethylsilyl)propyne], poly[1-(3,3,3-trifluoropropyldiethylsilyl)propyne], poly[1-(trimethylsilylmethyldimethylsily)propyne], poly[1-(trimethylsilylethyldimethysilyl)propyne], poly[1-(phenyldimethylsilyl)propyne], poly[1-(pentafluorophenyldimethylsilyl)-propyne], and poly[1-(beta-phenethyldimethylsilyl)-propyne]. Also included within these examples are copolymers composed of at least two kinds of the repeating units of the above poly(disubstituted acetylenes).

These poly(disubstituted acetylenes) can be obtained by polymerizing at least one starting disubstituted acetylene compound usually at a temperature of 30 to 100°C for 2 to 36 hours in an organic solvent in the presence of a catalyst, for example a halogen compound of tantalum, molybdenum, tungsten or niobium as a transition metal of Group V or VI, such as tantalum pentachloride, niobium pentachloride, molybdenum pentachloride, tungsten hexachloride, tantalum pentabromide and niobium pentabromide. Examples of the solvent that can be used are aromatic hydrocarbons such as benzene, toluene and xylene, alicyclic hydrocarbons such as cyclohexane, and chlorine-containing solvents such as chloroform, 1,2-dichloroethane and carbon tetrachloride. Alternatively, the desired polymer can be obtained by using the above catalyst as a main catalyst and a second component, for example an organometallic compound containing aluminum, silicon, tin or antimony such as trimethylaluminum, triethylaluminum, hydrosilane derivatives, tetraphenyltin, tetra-n-butyltin

and triphenyl antimony as a co-catalyst.

Strong bases used in reacting the poly(disubstituted acetylene) composed of repeating units of general formula (III) with the cyclosiloxane compound of general formula (IV) or the polyorganosiloxane with one reactive end represented by formula (VI) include organolithium compounds such as methyllithium, n-butyllithium, t-butyllithium, phenyllithium and lithium diisopropylamide, alkali metal hydrides such as potassium hydride and sodium hydride, and Grignard compounds such as methylmagnesium iodide, ethylmagnesium bromide and phenylmagnesium bromide. The organolithium compounds are preferred in view of their reaction efficiency. The strong base is used normally in an amount of 0.1 to 4 equivalents based on the repeating units of the starting poly(disubstituted acetylene). The ratio of introduction of the polyorganosiloxane component can be controlled by the amount of the strong base.

The use of solvent is preferred in the reaction of the poly(disubstituted acetylene) of formula (III) with the strong base. The solvent may be any solvent which dissolves the poly(disubstituted acetylene) and does not participate in the reaction. Examples are such organic solvents as n-pentane, n-hexane, cyclopentane, cyclohexane, tetrahydrofuran (THF), dimethoxyethane, toluene, benzene, and xylene. In view of the efficiency of reaction, THF and aliphatic hydrocarbons such as n-pentane, n-hexane cyclopentane and cyclohexane are preferred. The reaction temperature is usually 0 to 90°C at which the reaction proceeds favorably. The reaction of the poly(disubstituted acetylene) with the strong base is preferably carried out in the presence of a diamine such as N,N,N',N'-tetramethylethylenediamine because the reaction proceeds smoothly.

Examples of the substituents $R^9$ and $R^{10}$ in the cyclosiloxane compound of general formula (IV) include

alkyl groups such as methyl, ethyl and propyl groups, substituted alkyl groups resulting from substitution of a fluorine atom, a trimethylsilyl group, a phenyl group and a pentafluorophenyl group, or the group of the formula $-OCF(CF_3)_3$ for the hydrogen atom of the alkyl group, a phenyl group and a substituted phenyl group resulting from substitution of a fluorine atom for the hydrogen atom of the phenyl group. Examples of such cyclosiloxane compound are shown below.

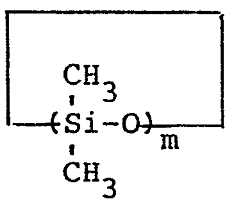 , 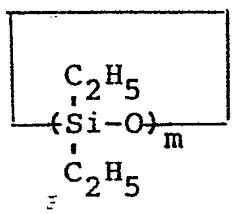 , 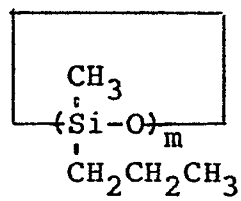 ,

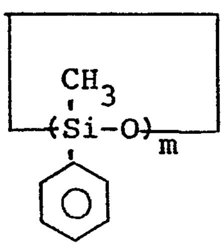 , 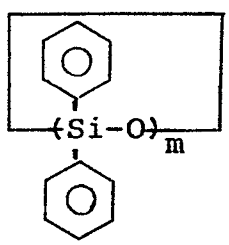 , 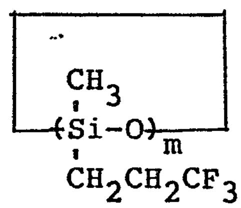 ,

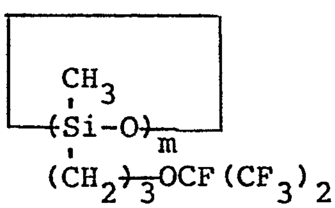 , 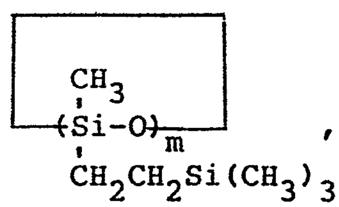 ,

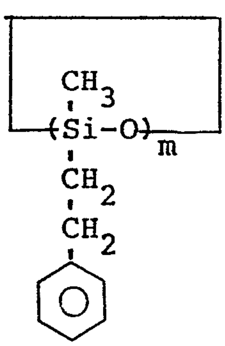 , 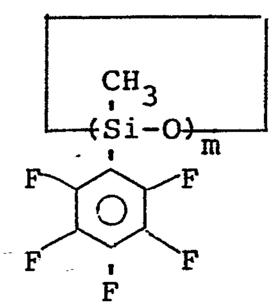 , 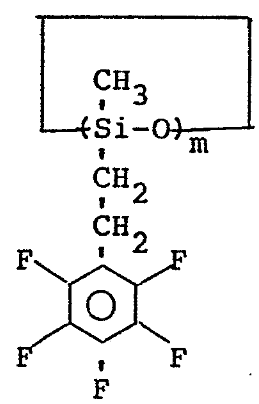 ,

(m is an integer of 3 to 6.)

Two or more of these cyclosiloxane compounds may be used as a mixture.

Preferably, the cyclosiloxane of general formula (IV) is added as a solvent solution to the reaction system. The solvent may be an organic solvent such as tetrahydrofuran, n-pentane, n-hexane, cyclopentane and cyclohexane. Usually, the reaction proceeds favorably at room temperature or temperatures in its vicinity, and after a reaction period of at least 2 hours, preferably at least 10 hours, ring-opening polymerization of the cyclosiloxane comes to completion.

Examples of substituents $R^6$ to $R^8$ of the triorganohalogenosilane compound are straight-chain or cyclic alkyl groups having a linear chain or a branched chain and 1 to 10 carbon atoms, substituted alkyl groups resulting from substitution of fluorine atoms, chlorine atoms, trimethylsilyl groups, phenyl groups, pentafluorophenyl groups, $-OCF(CF_3)_2$, $-COOCH_2(CF_2)_3-CF_3$ and $-COOCH_2C_6H_5$ for some of the hydrogen atoms of these alkyl groups, a phenyl group, and a substituted phenyl group resulting from substitution of alkyl groups, fluorine atoms, etc. for some of the hydrogen atoms of the phenyl group.

Fluorine, chlorine and bromine atoms are preferred as the halogen atom of the triorganohalogenosilane compound. Examples of such a triorgnohalogenosilane compound are given below.

$ClSi(CH_3)_3$ , $ClSi(C_2H_5)_3$, 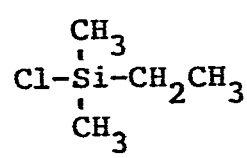 ,

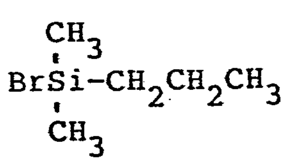 , 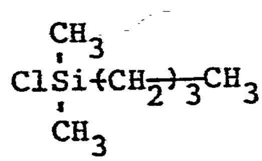 ,

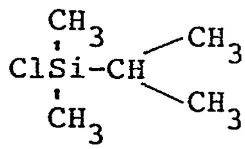 , 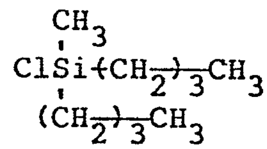 ,

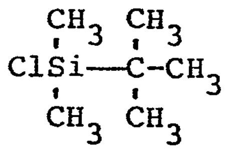 , 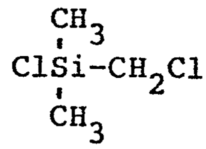 ,

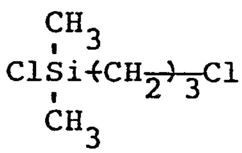 , 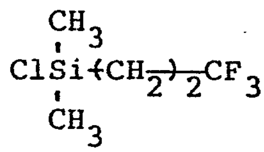 ,

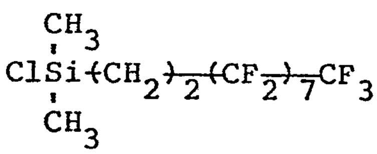 , 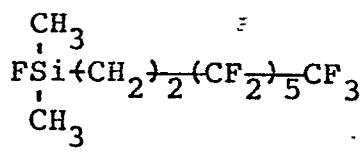 ,

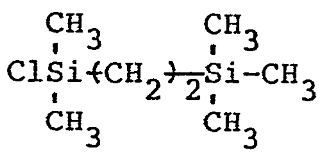 , 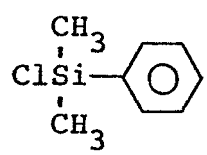 ,

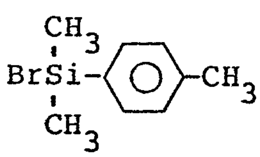 , 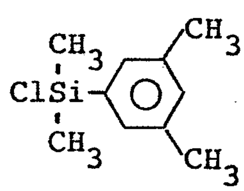 ,

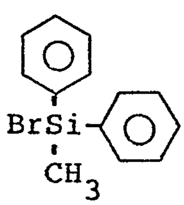 , 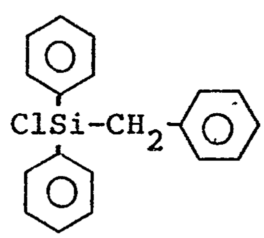 ,

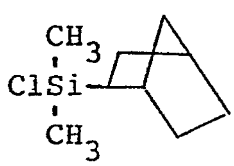 , 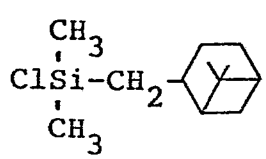 ,

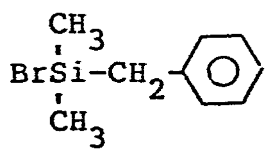 , 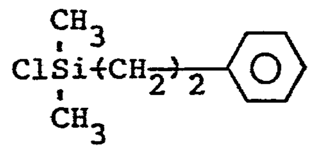 ,

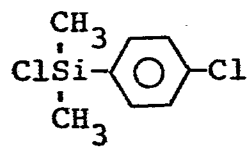 , 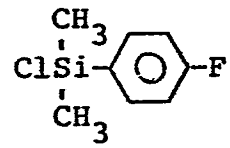 ,

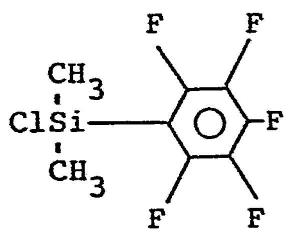 , 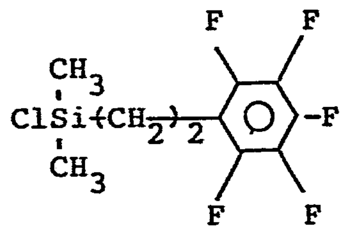 ,

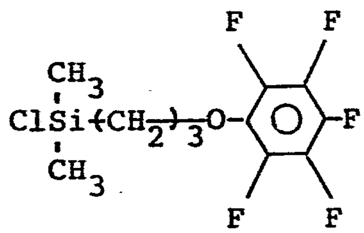 , 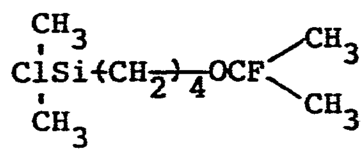 ,

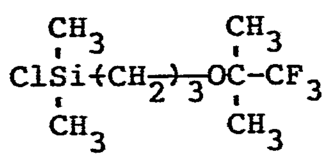 ,

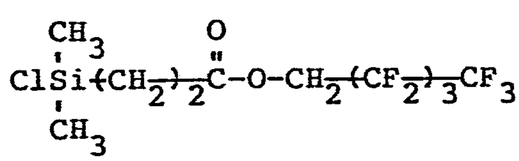 ,

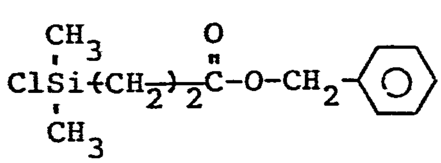 .

Most of these triorganohalogenosilane compounds are commercially available, and can be easily synthesized by known methods. By adding the triorganohalogenosilane compound in 2 to 20 equivalents excess to the amount of the strong base used, the reaction stops completely. The reaction is preferably carried out for at least 20 minutes.

Examples of the polyorganosiloxane of general formula (VI) with one reactive end are shown below.

(1)

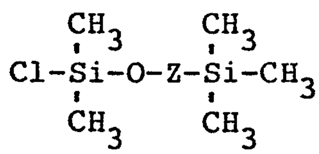 , 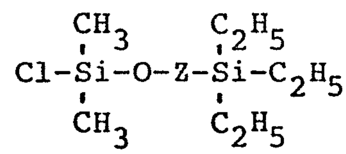 ,

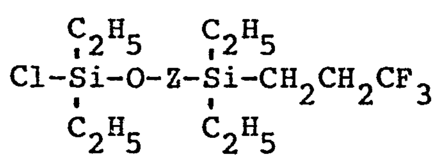 , 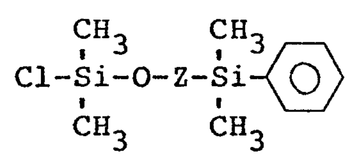 ,

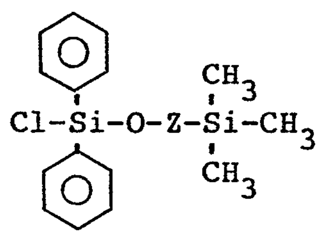 , 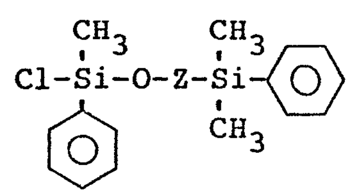 .

(2)

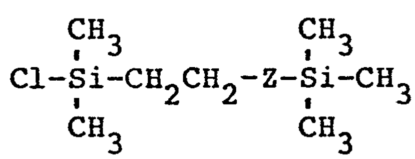 , 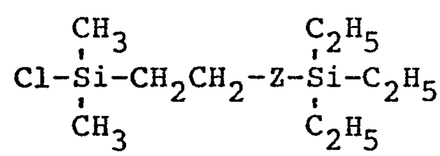 ,

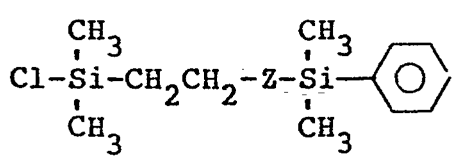 , 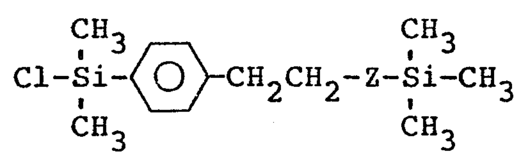 ,

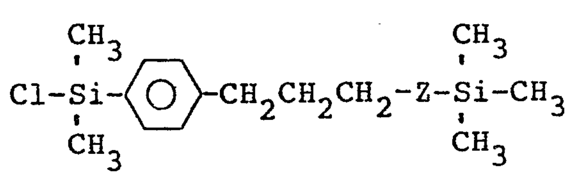 ,

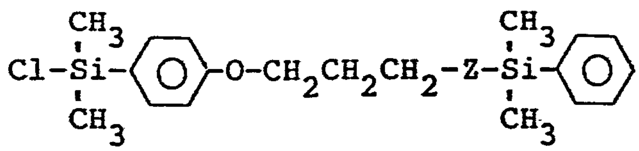 .

In the above formulae, Z represents a polyorganosiloxane chain in which the repeating units are represented by general formula (II) above. Examples are as follows:-

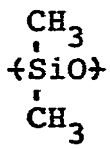 , 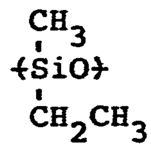 , 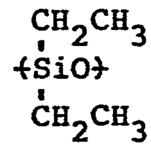 ,

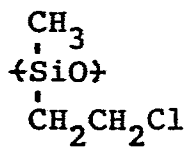 , 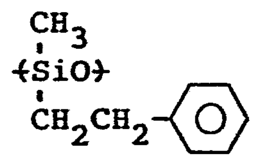 , 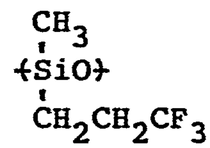 ,

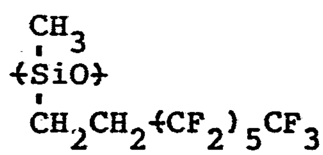 , 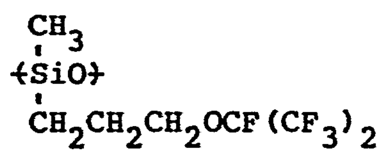 ,

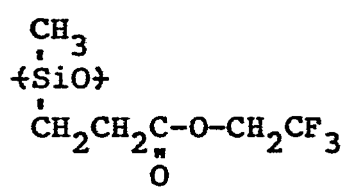 , 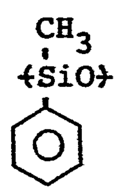 ,

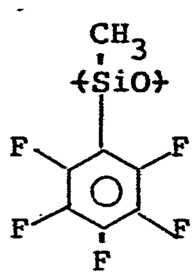 , 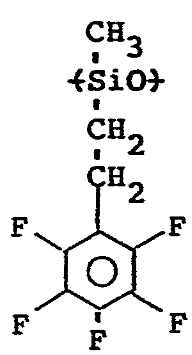 , 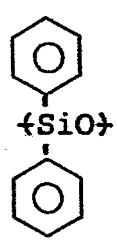 .

Among the polyorganosiloxanes having one reactive end, those of the group (1) can be synthesized by subjecting the cyclosiloxane compound to living anionic polymerization using as an initiator a silanolate anion obtained by adding an equimolar amount of n-butyllithium to a tri-substituted silanol, and stopping the reaction by using a halogenosilane compound having a reactive substituent, as illustrated by the following reaction scheme.

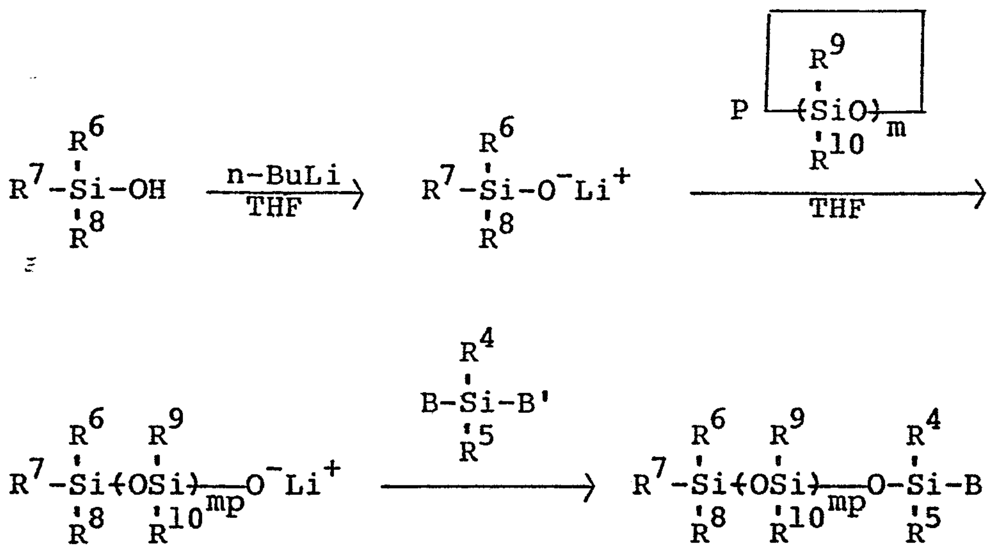


In the above scheme, p is at least 1; m is an integer of 3 to 6; B and B' are identical or different and each represents a halogen atom; and $R^4$ to $R^{10}$ are identical or different and each represents an alkyl group, a substituted alkyl group, a phenyl group or a substituted phenyl group, provided that $R^9$ and $R^{10}$ may vary from unit to unit. They can also be synthesized by reacting the above silanolate anion with an equimolar amount of an $\alpha,\omega$-dichloropolyorganosiloxane.

The polyorganosiloxanes having one reactive end in the group (2) may be synthesized by hydrosilylation between a polyorganosiloxane having a hydrosilyl group at one end having the general formula

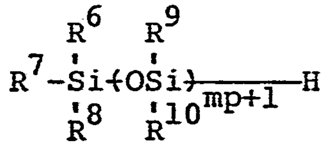 ..... (VIII)

wherein $R^6$ to $R^{10}$, m and p are as defined above, which can be synthesized as in the above reaction scheme except using a silane compound of the general formula

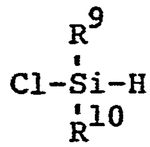 ..... (VII)

wherein $R^9$ and $R^{10}$ are as defined, instead of the compound of the formula

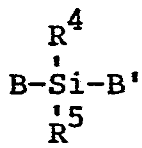

and a chlorosilane compound having a double bond.

Examples of the chlorosilane compound having a double bond which is used in the above reaction are shown below.

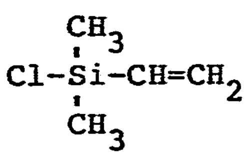 , 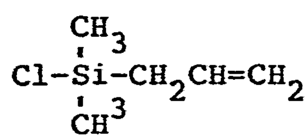 ,

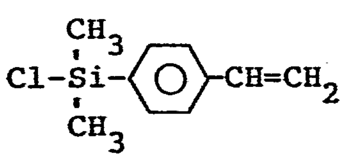 , 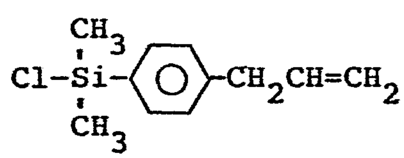 ,

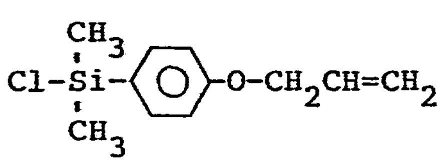 .

By using the polyorganosiloxane of general formula (VI) with one reactive end in an amount of 0.5 to 3.0 equivalents, preferably 0.9 to 2.0 equivalents, based on the strong base, the desired product can be obtained in good yields.

Some of the graft coopolymers forming the polymeric membrane of this invention can be produced by reacting a copolymer composed of the repeating units of general formula (III) given above and repeating units of the following general formula

$$\begin{array}{c} CH_2W \\ | \\ \!\!\!\left( C = C \right)\!\!\! \\ \quad\;\, | \\ \quad\;\, A \end{array} \qquad \cdots\cdots \text{(IX)}$$

wherein A is as defined above, W is a group of the formula

$$\begin{array}{c} R^4 \\ | \\ -Si-V \\ | \\ R^5 \end{array}$$

and V represents a group having a carbon-carbon double bond,

with a strong base, then reacting the product with the cyclosiloxane compound of general formula (IV), and stopping the reaction by adding the triorganohalogenosilane compound represented by general formula (V). Examples of the group having a carbon-carbon double bond represented by V are vinyl, vinylphenyl, allyl and p-vinylbenzyl groups.

The copolymer composed of the repeating units of general formulae (III) and (IX) can be obtained by copolymerizing the corresponding monomers. To obtain a copolymer having a high molecular weight, it is preferred to introduce a group having a carbon-carbon double bond into the poly(disubstituted acetylene) composed of the repeating units of general formula (III) by utilizing a polymer

reaction. Specifically, the copolymer composed of the repeating units of general formulae (III) and (IX) can be synthesized by reacting the poly(disubstiuted acetylene) composed of the repeating units of general formula (III) with the strong base, and then reacting the product with a halogen compound having a carbon-carbon double bond such as compounds shown by the following formula.

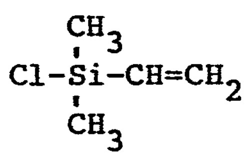 , 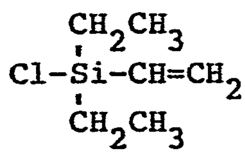 , 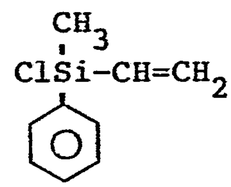 ,

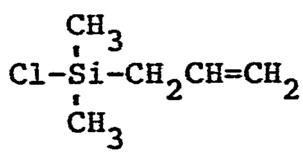 , 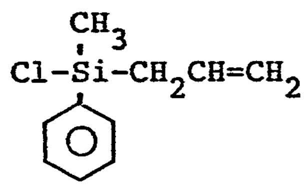 , 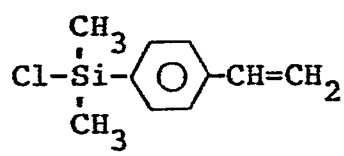 .

Organic lithium compounds such as n-butyllithium are preferred as the strong base used here. By performing the reaction in an organic solvent such as tetrahydrofuran usually at a temperature of about $0^{o}C$ for 1 to 2 hours, the desired copolymer can be synthesized without involving a reduction in molecular weight (see Referential Examples).

Examples of the strong base that can be used in the production of the graft copolymer used in this invention include organic lithium compounds such as methyllithium, n-butyllithium, t-butyllithium, phenyllithium and lithium diisopropylamide, alkali metal hydrides such as potassium hydride and sodium hydride, and Grignard compounds such as methyl magnesium iodide, ethyl magnesium bromide and phenyl magnesium bromide. The organolithium compounds are preferred in view of the efficiency of reaction. Usually, the strong base is used in an amount of about 1 to 3 equivalents based on the group having a carbon-carbon double bond in the side chain of the starting copolymer composed of the repeating units of general formulae (III) and (IX). In the reaction with the strong base, a solvent is preferably used.

The solvent may be any solvent which dissolves the poly(disubstituted acetylene) having a carbon-carbon double bond in the side chain and does not participate in the reaction. For example, there can be used organic solvents such as tetrahydrofuran, dimethoxyethane, n-pentane, n-hexane, cyclohexane and benzene. The reaction is carried out preferably at a temperature of -40°C to +30°C. More preferably, the reaction is carried out at a temperature of 0°C or below in order to prevent the decrease of the molecular weight of the product.

The cyclosiloxane compounds exemplified above can be conveniently used either singly or in combination. The product can be obtained in a good yield by using 0.5 to 50 equivalents of the cyclosiloxane compound of formula (I) based on the strong base.

By adjusting the amount of the cyclosiloxane compound to be added here, the ratio of introduction of the polyorganosiloxane component into the resulting graft copolymer can be controlled as desired.

Preferably, the cyclosiloxane compound is added as a solution in a solvent to the reaction system. The solvent used at this time may, for example, be an organic solvent such as tetrahydrofuran, n-pentane, n-hexane, cyclopentane and cyclohexane. The reaction temperature at which the cyclosiloxane compound reacts may usually be room temperature. Ring-opening polymerization of the cyclosiloxane compound fully proceeds by performing the reaction for at least 2 hours, preferably at least 10 hours.

Thereafter, the reaction is stopped by adding the triorganohalogenosilane represented by general formula (V). By adding the triorganohalogenosilane compound to the reaction system in 2 to 20 equivalents excess based on the used strong base, the reaction stops completely. Preferably, the time required for stopping the reaction is at least 20 minutes.

The terminal group of the branched chain of the resulting graft copolymer is represented by the following formula

$$-\overset{R^6}{\underset{R^8}{\overset{|}{\underset{|}{Si}}}}-R^7$$

wherein $R^6$ to $R^8$ are as defined above.

Some of the graft copolymers forming the polymeric membrane of this invention can be produced by reacting a copolymer composed of the repeating units of general formula (III) and the repeating units of general formula (IX) with the polyorganosiloxane having a hydrosilyl group at one end and represented by general formula (VIII) in the presence of a hydrosilylation catalyst.

In this method, the grafting of the siloxane chain is achieved by the addition of the hydrosilyl group of the polyorganosiloxane having the hydrosilyl group at one end to the carbon-carbon double bond, which is called hydrosilylation reaction.

In this reaction, the use of a hydrosilylation catalyst is essential. Most generally, chloroplatinic acid ($H_2PtCl_6.6H_2O$) is used as the hydrosilylation catalyst. Metal complexes containing palladium or rhodium may also be used. For example, $(Ph_3P)_4Pd$, $(Ph_3P)_2PdCl_2$, $(PhCN)_2PdCl_2$, $(Ph_3P)_3RhCl$, $(Ph_2PH)_2RhCl$, $(Ph_3P)_2(CO)RhCl$ and $[(C_2H_5)_3P]_2(CO)RhCl$ may be used as the catalyst. It is usually sufficient to use the catalyst in the amount of about 1/100 to 1/1000 equivalent based on the group having a carbon-carbon double bond. This reaction is preferably carried out in a solvent. For example, hexane, benzene, toluene, acetone, trichloroethylene, carbon tetrachloride and tetrahydrofuran (THF) may be used as the solvent. The reaction temperature is in the range of 40°C to 100°C, and desirably, the reaction is carried out in an atmosphere of

an inert gas such as argon or nitrogen. The reaction is completed by performing it usually for at least 2 hours, preferably for at least 10 hours.

The graft copolymer in accordance with this invention is soluble in aromatic solvents such as toluene, benzene, ethylbenzene and xylene, halogenated hydrocarbons such as carbon tetrachloride, chloroform and trichloroethylene, hydrocarbon solvents such as n-hexane, cyclohexane and cyclohexene and ether solvents such as tetrahydrofuran, but insoluble in alcohols and water.

It is necessary that in the poly(disubstituted acetylene)/polyorganosiloxane graft copolymer composed of the repeating units of general formula (I) forming the polymeric membrane of the invention, the mole ratio of the repeating units of the poly(disubstituted acetylene) in the main chain to the repeating units of the polyorganosiloxane in the side chain should be within the range of from 99:1 to 5:95. If the proportion of the organosiloxane units is below the lower limit of this range, the liquid separating characteristics of the resulting membrane hardly differ from those of a membrane from the starting poly(disubstituted acetylene). If it exceeds the upper limit specified above, the graft copolymer has too low a glass transition point. Hence, the graft copolymer has reduced film-forming ability and tends to be difficult to form into a thin membrane. When A in general formula (I) is the group 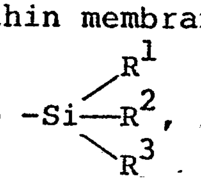, it is preferred that the above mole ratio should be within the range of from 98:2 to 20:80. When A is an alkyl group, a substituted alkyl group, a phenyl group or a substituted phenyl group, the above mole ratio is preferably within the range of from 60:40 to 5:95. Graft copolymers having mole ratios within these ranges can be obtained by adjusting the amount of the strong base, the amount of the cyclosiloxane compound

of general formula (IV), or the amount and chain length of the polyorganosiloxane of general formula (VI) having one reactive end.

The weight average molecular weight of the copolymer is desirably high in view of membrane strength, and usually at least 10,000, preferably at least 50,000.

The method of forming the graft copolymer into the polymeric membrane of the invention is not particularly limited, and any known means can be used. For example, it can be formed into a membrane by casting a solution of the copolymer onto a metal substrate, a glass plate, a water surface, etc. and evaporating the solvent. A method comprising immersing a porous support in the solution of the copolymer and immediately then, pulling it up and a method comprising coating the solution and then drying it can also be employed. Examples of good solvents for use in these methods are aromatic solvents such as toluene, benzene, ethylbenzene and xylene, halogenated hydrocarbons such as carbon tetrachloride, chloroform and trichloroethylene and ether solvents such as tetrahydrofuran.

The membrane is preferably used in a thickness of 0.05 to 100 micrometers, especially 0.1 to 50 micrometers, in order to give a sufficient flux and practical strength. If the membrane is as thin as 1 micrometer or below, it is preferably used together with a support. The support may be a porous support having sufficient strength to support the membrane, such as a woven fabric, a nonwoven fabric, a microfilter or an ultrafiltration membrane.

The membrane of this invention may be in any form such as a flat membrane, a tubular membrane or a hollow-fiber membrane. An asymmetric membrane may also be prepared from the graft copolymer used in this invention by dissolving it in a solvent, spreading the solution onto a metal substrate, a glass plate, a water surface, etc.,

and immediately then, dipping it in a poor solvent such as alcohols or water.

In the present invention, the above separating membrane may be used in the form of a laminated membrane with another membrane. The laminated membrane may be in any form, such as a flat membrane, a tubular membrane or a hollow-fiber membrane.

The liquid mixture to be separated in this invention may be any liquid mixture which does not dissolve the membrane of the invention. Components which constitute the liquid mixture may include, for example, water, and organic liquids, for example alcohols such as methanol, ethanol, propanol, butanol, pentanol, hexanol, cyclohexanol, allyl alcohol, ethylene glycol, glycerol and 2,2,2-trifluoroethanol, ketones such as acetone and methyl ethyl ketone, acids such as formic acid, acetic acid, propionic acid, acrylic acid, methacrylic acid, maleic acid and crotonic acid, esters of these acids, ethers such as dimethyl ether, diethyl ether, tetrahydrofuran and dioxane, amines such as methylamine, ethylamine, ethylenediamine, aniline and pyridine, N,N-dimethylformamide, sulfolane and dimethyl sulfoxide.

The liquid mixture to be separated in this invention is a mixture containing two or more liquid compounds above.

The membrane of this invention can of course be used to separate a liquid mixture containing an inorganic substance suspended therein. Examples of liquid mixtures for which the separating membrane of this invention shows particularly good permselectivity are water-organic liquid mixtures, particularly water-alcohol mixtures such as a water-methanol mixture and a water-ethanol mixture, and water-ketone mixtures such as a water-acetone mixture.

The membrane of this invention can be used over a wide temperature range, preferably at a temperature in the range of -30 to 150°C, more preferably 0 to 100°C.

Higher temperatures are undesirable in view of the durability of the membrane. Lower temperatures are also undesirable in view of the reduction of permeability and the energy required for cooling.

In the separation and concentration of the liquid mixture by using the membrane of this invention, the substance which permeates through the membrane may be taken out in the form of a liquid or a vapor. Preferably, it is taken out as a vapor in order to have the separating ability of the membrane exhibited fully. In this case, the pressure on that side of the separating membrane to which the liquid mixture is supplied is desirably atmospheric pressure to 100 atmospheres, preferably atmospheric pressures and pressures in its vicinity. Application of higher pressures is not so advantageous for the permselectivity of the separating membrane. The space on the other side of the separating membrane should be maintained under reduced pressure, or an inert gas such as air should be passed through it so as to maintain the chemical potential of the component to be separated lower than that on the supply side.

The separating membrane of this invention has very high separability. But when the permeated substance does not attain the desired purity by one permeation of the liquid mixture, its purity can be elevated to the desired one by repeatedly permeating the permeated product through the membrane. Since the separating membrane of this invention has higher strength than conventional silicone rubber membranes, it can be formed in a small thickness. Furthermore, since it has very good liquid permselectivity, the separation or concentration of various liquid mixtures such as water-alcohol mixtures can be effected very efficiently by using the membrane of this invention.

The following Referential Examples, Examples and Comparative Examples illustrate the present invention in

greater detail. It should be understood that the present invention is not limited to these examples.

REFERENTIAL EXAMPLE 1

Synthesis of poly(1-phenylpropyne):-

1-Phenylpropyne (44.3 g) was dissolved in 500 ml of toluene, and 2.7 g of tantalum pentachloride was added. After deaeration and sealing, the mixture was shaken at 80°C for 6 hours in a stainless steel polymerization tube to give a viscous gel-like polymer. The polymer was dissolved in toluene and reprecipitated several times from a large amount of methanol. The resulting yellow fibrous solid was dried at 60°C under vacuum. The amount of the dried product obtained was 38.2 g (yield 86.2%). The resulting polymer was subjected to IR, $^1$H-NMR and $^{13}$C-NMR measurements and elemental analysis, and identified as the desired poly(1-phenylpropyne). As a result of GPC measurement, the polymer was found to have a number average molecular weight, and a weight average molecular weight, of $2.15 \times 10^5$ and $5.53 \times 10^5$, respectively as calculated for polystyrene.

EXAMPLE 1

3.8 g of the poly(1-phenylpropyne) obtained in Referential Example 1 was dissolved in 450 ml of dry cyclohexane, and the solution was heated in a stream of argon gas at 60°C. 4.90 ml (32.7 mmol) of N,N,N',N'-tetramethylethylenediamine and 20.4 ml (32.7 mmol) of a hexane solution of n-butyllithium (1.6 mole/liter) were added, and the mixture was continuously stirred for one hour. The reaction solution assumed a black red color. Then, the reaction solution was cooled to room temperature, and a solution of 36.4 g (163.6 mmol) of hexamethylcyclotrisiloxane in 250 ml of dry THF was added at a time. The reaction solution turned from black red to black purple and then gradually turned pale yellow. The stirring was continued further for 24 hours at room temperature, and 18 ml (142 mmol) of trimethylchlorosilane was added to stop

the reaction. The reaction mixture was further stirred for 2 hours, and finally poured into 5 liters of methanol to give a white polymer. The resulting polymer was dissolved in 300 ml of toluene again, and re-precipitated from 4 liters of a mixture of methanol and diethyl ether (80:20 by volume percent). The polydimethylsiloxane was removed by repeating the reprecipitation several times to purify the polymer. The amount of the polymer obtained was 6.8 g.

By GPC measurement, the resulting polymer was found to have a number average molecular weight, and a weight average molecular weight, of $2.37 \times 10^5$ and $5.61 \times 10^5$, respectively, calculated as polystyrene.

The results of IR and $^1$H-NMR spectral measurements and elemental analysis were as follows:-

IR spectrum ($cm^{-1}$): 3100 (m), 3070 (s), 3040 (m), 2980 (s), 2920 (s), 2860 (m), 1950 (w), 1890 (w), 1800 (w), 1600 [s, the characteristic absorption of the phenyl group of the poly(1-phenyl propyne) in the main chain], 1500 (s), 1440 (s), 1415 (m), 1370 (s), 1260 (s, the characteristic absorption of the methyl group of the polydimethylsiloxane in the side chain), 1100 (s, the characteristic absorption of the siloxane linkage), 1220 (s, the characteristic absorption of the siloxane linkage), 910 (w), 860 (s), 800 (s), 770 (s), and 695 (s).

$^1$H-NMR spectrum, $\delta$ ($CDCl_3$, ppm): 0.10 (the proton peak of the methyl group of the polydimethylsiloxane in the side chain), 1.60 (the proton peak of the methyl group of the poly(1-phenylpropyne) in the main chain, and 6.90 [the proton peak of the phenyl group of the poly(1-phenylpropyne) in the main chain].

Elemental analysis values (%): C,57.01, H,7.54

The above results led to the determination that the resulting polymer was a poly(1-phenylpropyne)/polydimethylsiloxane graft copolymer having a structure resulting from substitution of a group of the following formula

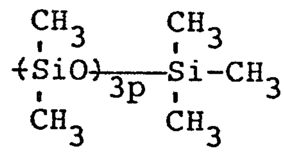

(p = an integer of at least 1)

for part of the hydrogen atoms on the methyl group of the starting poly(1-phenylpropyne). The mole ratio of the repeating units of the poly(1-phenylpropyne) in the main chain to the repeating units of the polydimethylsiloxane in the side chain in the resulting graft copolymer, calculated from the proton peak area ratio at 0.10 ppm and 6.90 ppm in the $^{1}H$-NMR spectrum, was 30:70.

The resulting graft copolymer was dissolved in toluene, and the solution was cast onto a Teflon plate. Toluene was then slowly evaporated to give a uniform transparent tough membrane having a thickness of 28 micrometers. The resulting membrane was inserted into a stainless steel pervaporation cell, and the permeate side of the cell was maintained under a reduced pressure of 0.5 mgHg. A water-ethanol mixture was permeated through the membrane. The composition of the mixture which permeated through the membrane was detected by TCD-gas chromatography, and the permeation velocity P ($g.m/m^2.hr$) and selectivity $\alpha$ were calculated in accordance with the following equations.

$$P = \frac{\text{Weight of the permeated liquid} \times \text{Membrane thickness}}{\text{Membrane} \times \text{Time}} \quad (g.m/m^2.hr)$$

$$\alpha^{A}_{B} = \frac{\left(\begin{array}{l}\text{Weight fraction of}\\ \text{component A in the}\\ \text{permeated liquid}\end{array}\right) \Big/ \left(\begin{array}{l}\text{Weight fraction of}\\ \text{component B in the}\\ \text{permeated liquid}\end{array}\right)}{\left(\begin{array}{l}\text{Weight fraction}\\ \text{of component A in}\\ \text{the feed liquid}\end{array}\right) \Big/ \left(\begin{array}{l}\text{Weight fraction}\\ \text{of component B in}\\ \text{the feed liquid}\end{array}\right)}$$

The above permeation test was conducted several times with varying compositions of the feed liquid, and P and α were determined in each run. The results are shown in Table 1.

Table 1

| Liquid composition (ethanol/water, wt.%) | | P ($g.m/m^2.hr$) | $\alpha^{ethanol}_{water}$ |
|---|---|---|---|
| Feed liquid | Permeated liquid | | |
| 8.61/91.39 | 74.47/25.53 | $5.51 \times 10^{-4}$ | 30.96 |
| 12.59/87.41 | 77.51/22.49 | $7.47 \times 10^{-4}$ | 23.93 |
| 27.03/72.97 | 87.51/12.49 | $1.50 \times 10^{-3}$ | 18.91 |
| 53.54/49.46 | 92.26/ 7.74 | $2.32 \times 10^{-3}$ | 10.34 |
| 80.05/19.95 | 95.93/ 4.07 | $3.36 \times 10^{-3}$ | 5.87 |

EXAMPLE 2

By operating in the same way as in Example 1 except that the amount of the hexamethylcyclotrisiloxane was changed to 54.6 g (245 mmol), a white polymer (8.7 g) was obtained.

By GPC measurement, the polymer was found to have a number average molecular weight, and a weight average molecular weight, of $2.44 \times 10^5$ and $5.65 \times 10^5$, respectively, calculated as polystyrene.

The IR and $^1H$-NMR spectra of the resulting polymer were the same as in Example 1, and its elemental analysis values were as follows:-

Elemental analysis values (%): C,49.98, H,7.65

Accordingly, the resulting polymer was poly(1-phenylpropyne)/polydimethylsiloxane graft copolymer having the same structure as the polymer obtained in Example 1.

The mole ratio of the repeating units of the poly(1-phenylpropyne) in the main chain to the repeating units of the polydimethylsiloxane in the side chain, determined from the proton peak area ratio of the $^1$H-NMR spectrum was 20:80.

A uniform, transparent and tough film having a thickness of 25 micrometers was prepared from the resulting graft copolymer by the same method as in Example 1. The permeation characteristics of this membrane with respect to a water-ethanol mixture were measured with varying compositions of the feed liquid by the same method as in Example 1. The results are shown in Table 2.

Table 2

| Liquid composition (ethanol/water, wt.%) | | P ($g.m/m^2.hr$) | $\alpha^{ethanol}_{water}$ |
|---|---|---|---|
| Feed liquid | Permeated liquid | | |
| 7.25/92.75 | 75.71/24.29 | $5.69x10^{-4}$ | 39.88 |
| 12.88/87.12 | 84.20/15.80 | $9.77x10^{-4}$ | 36.05 |
| 27.53/72.47 | 91.63/ 8.37 | $1.85x10^{-3}$ | 28.82 |
| 54.39/45.61 | 94.62/ 5.38 | $2.85x10^{-3}$ | 14.75 |
| 80.95/19.05 | 96.65/ 3.35 | $4.14x10^{-3}$ | 6.79 |

EXAMPLE 3

A white polymer (11.5 g) was obtained by quite the same operation as in Example 1 except that the amount of hexamethylcyclotrisiloxane was changed to 36.1 g (162 mmol), and 38.0 g (80.9 mmol) of tris(3,3,3-trifluoropropyl)trimethylcyclotrisiloxane was added.

By GPC measurement, the resulting polymer was found to have a number average molecular weight, and a

weight average molecular weight, of 2.44 x $10^5$ and 5.29 x $10^5$, respectively, calculated as polystyrene.

The results of IR and $^1$H-NMR spectral measurements and elemental analysis were as follows:-

IR spectrum ($cm^{-1}$): 3100 (m), 3070 (s), 3040 (m), 2980 (s), 2920 (m), 1950 (w), 1600 (m, the characteristic absorption of the phenyl group of the poly(1-phenylpropyne) in the main chain), 1500 (m), 1440 (m), 1370 (m), 1318 (m), 1260 (s, the characteristic absorption of the methyl group of the polydimethylsiloxane in the side chain), 1210 (s, the characteristic absorption of the C-F linkage), 1130 (s), 1100 (s, the characteristic absorption of the siloxane linkage), 1070 (s), 1020 (s, the characteristic absorption of the siloxane linkage), 900 (s), 840 (s), 800 (s), 770 (s), 695 (s), and 550 (m).

$^1$H-NMR spectrum, $\delta$($CDCl_3$, ppm): 0.10 (the proton peak of the methyl group of the polydimethylsiloxane in the side chain), 0.85 (the proton peak of the methylene group of the 3,3,3-trifluoropropylsilyl group on the silyl group side), 1.60 [the proton peak of the methyl group of the poly(1-phenylpropyne) in the main chain], 2.12 (the proton peak of the methylene group of the 3,3,3-trifluoropropylsilyl group on the trifluoromethyl group side) and 6.90 [the proton peak of the phenyl group of the poly(1-phenylpropyne) in the main chain].

Elemental analysis values (%): C,46.32, H,5.99

The above results led to the determination that the resulting polymer was poly(1-phenylpropyne)/polydimethylsiloxane graft copolymer having a structure resulting from substitution of a group of the following formula

$$-Z'-\overset{\displaystyle CH_3}{\underset{\displaystyle CH_3}{Si}}-CH_3$$

wherein Z' is polyorganosiloxane composed of repeating units of the formulae

$$-(\overset{CH_3}{\underset{CH_3}{Si}}O)- \quad \text{and} \quad -(\overset{CH_3}{\underset{CH_2CH_2CF_3}{Si}}O)- ,$$

for part of the hydrogen atom on the methyl group of the starting poly(1-phenylpropyne). As calculated from the proton peak area at 0.10 ppm, 0.85 ppm and 6.90 ppm in the $^1H$-NMR, the mole ratio of the repeating units represented by $-(\overset{CH_3}{\underset{CH_3}{Si}}O)-$ to repeating units represented by $-(\overset{CH_3}{\underset{CH_2CH_2CF_3}{Si}}O)-$ in the side-chain polyorganosiloxane was 63:37, and the mole ratio of the repeating units of the poly(1-phenylpropyne) in the main chain to the repeating units of the polydimethylsiloxane in the side chain in the resulting graft copolymer was 22:78.

A uniform, transparent and tough membrane having a thickness of 22 micrometers was prepared from the resulting graft copolymer by the same method as in Example 1. The permeation characteristics of this membrane with respect to a water-ethanol mixture were measured with varying compositions of the feed liquid by the same method as in Example 1. The results are shown in Table 3.

Table 3

| Liquid composition (ethanol/water, wt.%) | | P (g.m/m$^2$.hr) | $\alpha$ ethanol water |
|---|---|---|---|
| Feed liquid | Permeated liquid | | |
| 8.03/91.97 | 71.57/28.43 | $6.34 \times 10^{-4}$ | 28.83 |
| 11.96/88.04 | 74.88/25.12 | $7.02 \times 10^{-4}$ | 21.94 |
| 26.54/73.46 | 88.68/11.32 | $1.67 \times 10^{-3}$ | 21.68 |
| 52.49/47.51 | 92.30/ 7.70 | $3.26 \times 10^{-3}$ | 10.85 |
| 80.95/19.05 | 95.64/ 4.36 | $5.98 \times 10^{-3}$ | 5.16 |

REFERENTIAL EXAMPLE 2

Synthesis of poly(1-trimethylsilylpropyne):-

42.6 g of 1-trimethylsilylpropyne was dissolved in 300 ml of toluene, and 2.4 g of tantalum pentachloride was added. After deaeration and sealing, the mixture was shaken in a stainless steel polymerization tube at 80°C for 24 hours to give a viscous gel-like polymer. The polymer was dissolved in toluene, and re-precipitated several times from a large amount of methanol. The resulting white fibrous solid was dried at 60°C under vacuum. The amount of the polymer yielded was 38.5 g (yield 90.3%). The resulting polymer was subjected to IR, $^1$H-NMR and $^{13}$C-NMR spectral measurements and elemental analysis and consequently identified as the desired poly(1-trimethylsilylpropyne). By GPC measurement, the polymer was found to have a number average molecular weight, and a weight average molecular weight, of $5.36 \times 10^5$ and $2.26 \times 10^6$, respectively, calculated as polystyrene.

REFERENTIAL EXAMPLE 3

Synthesis 1 of polysiloxane having one reactive end:-

14.2 g (0.157 mol) of trimethylsilanol was dissolved in 200 ml of dry THF, and 100 ml (0.16 mol) of a hexane solution of n-butyllithium (1.6 mol/liter) was added in a stream of argon gas. The mixture was stirred for 10 minutes, and a solution of 35.6 g (0.479 mol) of hexamethylcyclotrisiloxane in 200 ml of dry THF was added. The mixture was stirred for 21 hours at room temperature in a stream of argon gas. As a terminating agent, 60 ml (0.551 mol) of dimethylchlorosilane was added to the solution to stop the living polymerization. Then, the solvent was removed under reduced pressure, and the resulting salt was separated by filtration. The product was heated at 150°C under a vacuum of less than 0.1 mmHg for 3 hours to remove the unreacted cyclosiloxane and the excess of the terminating agent. A colorless transparent viscous liquid (51.6 g) was obtained. The resulting polymer was determined to have the following structure by IR and NMR measurements.

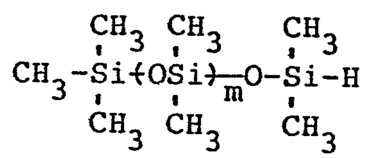

The average degree of polymerization, m, of the polymer was about 4.2 based on the proton ratio in the NMR.

25.0 g (about 0.067 mol) of the polydimethylsiloxane so obtained was dissolved in 50 ml of dry toluene, and 30 ml (0.22 mol) of vinyldimethylchlorosilane and 14 microliters of an ethanol solution of chloroplatinic acid (0.193 mol/liter) as a catalyst were added to the solution in a stream of argon gas. The mixture was stirred at 80°C for 2 hours. When the solution was subjected to IR spectral measurement, it was found that the absorption peak (2175 $cm^{-1}$) based on the Si-H linkage at the end of the starting polydimethylsiloxane completely

disappeared. In a stream of argon, the solvent and the excess of dimethylchlorosilane were removed by evaporation from the resulting solution, and about 26 g of polydimethylsiloxane having a dimethylchlorosilyl group at one end was obtained.

EXAMPLE 4

1.0 g (8.90 mmol) of the poly[1-(trimethylsilyl)-propyne] obtained in Referential Example 2 was dissolved in 200 ml of THF, and in an argon stream, 6.0 ml (9.60 mmol) of a hexane solution of n-butyllithium was stirred at 0°C in a stream of argon. When the mixture was stirred for 3 hours, the reaction solution assumed a red color. Furthermore, 14 g (about 24 mmol) of the polydimethylsiloxane having a dimethylchlorosilyl group at one end obtained in Referential Example 3 was added, and the mixture was stirred at 0°C for 15 minutes. After confirming that the reaction solution changed from a red solution to a colorless transparent solution, the reaction solution was poured into 2 liters of methanol to form a precipitate. Thereafter, the precipitate was re-precipitated in the same way several times for purification. The resulting precipitate was separated by filtration and dried to give 1.09 g of a white polymer. By GPC measurement, this polymer was found to have a number average molecular weight, and a weight average molecular weight, of $4.26 \times 10^5$ and $19.0 \times 10^6$, respectively, calculated as polystyrene. The IR spectrum and the elemental analysis values of the polymer were as follows.

IR spectrum ($cm^{-1}$): 2980 (s), 2920 (s), 1565 (s), 1433 (m), 1370 (m, the characteristic absorption of the methyl group on the main-chain polytrimethylsilylpropyne), 1260 (s, the characteristic absorption of the methyl group on the side-chain polydimethylsiloxane), 1250 (s, the characteristic absorption of the trimethylsilyl group on the main-chain polytrimethylsilylpropyne), 1180 (m), 1100 (s, the characteristic absorption of the

siloxane linkage), 1180 (m), 1100 (s, the characteristic absorption of the siloxane linkage), 1020 (s), 915 (m), 840 (s), 800 (s), 750 (s), 685 (m), 630 (m).

Elemental analysis values (%): C,63.59, H,10.48

From the above results, the resulting polymer was determined to be poly(1-trimethylsilylpropyne)/poly-dimethylsiloxane graft copolymer having a structure resulting from substitution of a group represented by the following formula

$$-\overset{CH_3}{\underset{CH_3}{Si}}CH_2CH_2\!\left(\overset{CH_3}{\underset{CH_3}{Si}}O\right)_{\overline{m}+1}\overset{CH_3}{\underset{CH_3}{Si}}-CH_3 \quad (\overline{m} \doteq 4.2)$$

for part of the hydrogen atoms on the methyl group directly connected to the main-chain double bond of the starting poly[1-(trimethylsilyl)propyne]. The mole ratio of the monomer units of the main-chain poly(1-trimethylsilylpropyne) to the monomer units of the side-chain polydimethylsiloxane, calculated from the carbon content in the elemental analysis values, was 96:4.

100 mg of the resulting graft copolymer was dissolved in 2 ml of m-xylene, and the solution was cast on a Teflon plate having an area of 25 $cm^2$. The solvent was evaporated at 40$^{\circ}$C, and the resulting membrane was fully dried in vacuum to give a uniform transparent membrane having a thickness of 12.6 micrometers. The permeation characteristics of the resulting membrane with respect to a water-ethanol mixture were measured by the method of Example 1 with varying compositions of the feed liquid, and the results are shown in Table 4.

Table 4

| Liquid composition (ethanol/water, wt.%) | | P $(g.m/m^2.hr)$ | ethanol $\alpha_{water}$ |
|---|---|---|---|
| Feed liquid | Permeated liquid | | |
| 7.46/92.54 | 62.88/37.12 | $1.42 \times 10^{-3}$ | 21.01 |
| 22.42/77.58 | 80.79/19.21 | $2.43 \times 10^{-3}$ | 14.55 |
| 50.77/49.23 | 89.37/10.63 | $5.24 \times 10^{-3}$ | 8.15 |
| 69.84/30.16 | 91.87/ 8.13 | $7.67 \times 10^{-3}$ | 4.88 |

## REFERENTIAL EXAMPLE 4

Synthesis 2 of polysiloxane having one reactive end:-

Polydimethylsiloxane having a structure represented by the following formula

$$CH_3-\underset{CH_3}{\overset{CH_3}{Si}}\left(O\underset{CH_3}{\overset{CH_3}{Si}}\right)_m O-\underset{CH_3}{\overset{CH_3}{Si}}-H \quad (\bar{m} \doteqdot 6.2)$$

was produced by operating in the same way as in Referential Example 3 except that the amounts of trimethylsilanol, the hexane solution of n-butyllithium and the dimethylchlorosilane were changed to 7.2 g (0.0798 mol), 50 ml (0.080 mol) and 30 ml (0.275 mol), respectively.

Furthermore, 22.0 g of the polydimethylsiloxane was subjected to hydrosilylation reaction with vinyldimethylchlorosilane as in Referential Example 3 to give about 24 g of polydimethylsiloxane having a dimethylchlorosilyl group at one end.

EXAMPLE 5

By operating in the same way as in Example 4 except that 10 g (about 16 mmol) of the polydimethylsiloxane having a diemthylchlorosilyl group at one end obtained in Referential Example 4 was used instead of polyidimethylsiloxane having a dimethylchlorosilyl group at one end obtained in Referential Example 3, 1.08 g of poly(1-trimethylsilylpropyne)/polydimethylsiloxane graft copolymer having a structure resulting from substitution of a group represented by the following formula

$$-\underset{CH_3}{\overset{CH_3}{|}}{Si}CH_2CH_2(\underset{CH_3}{\overset{CH_3}{|}}{SiO})_{\overline{m}+1}\underset{CH_3}{\overset{CH_3}{|}}{Si}-CH_3 \quad (\bar{m} \doteq 6.2)$$

for part of the hydrogen atoms on the methyl group directly bonded to the main-chain double bond of the poly[1-(trimethylsilyl)propyne]. Its IR spectrum was quite identical with that of the polymer obtained in Example 1. The intensity of absorption of the methyl group on the side-chain polydimethylsiloxane at 1260 $cm^{-1}$ and the characteristic absorption of the siloxane linkage at 1100 $cm^{-1}$ became stronger.

Elemental analysis values (%): C,61.60, H,9.69

The mole ratio of the monomer units of the main-chain poly[1-(trimethylsilyl)propyne] to the monomer units of the side-chain polydimethylsiloxane, calculated from the above carbon content, was 88:12. The copolymer had a number average molecular weight, and a weight average molecular weight, of $4.13 \times 10^5$ and $1.77 \times 10^6$, respectively, calculated as polystyrene.

A uniform, transparent and tough membrane having a thickness of 18.8 micrometers was prepared from the resulting graft copolymer by the same method as in Example 4. The permeation characteristics of this membrane with respect to a water-ethanol mixture were measured by the

method of Example 1 with varying compositions of the water-ethanol mixture. The results are shown in Table 5. By using the same membrane, the permeation characteristics of a water-acetone mixture were measured by the same method, and the results are shown in Table 6.

Table 5

| Liquid composition (ethanol/water, wt.%) | | P (g.m/m$^2$.hr) | $\alpha^{ethanol}_{water}$ |
|---|---|---|---|
| Feed liquid | Permeated liquid | | |
| 7.14/92.86 | 67.96/32.04 | $1.44 \times 10^{-3}$ | 27.59 |
| 21.07/88.93 | 76.59/23.41 | $1.86 \times 10^{-3}$ | 13.81 |
| 39.86/60.14 | 83.52/16.48 | $2.76 \times 10^{-3}$ | 7.65 |
| 72.66/27.34 | 91.32/ 8.68 | $6.38 \times 10^{-3}$ | 3.96 |
| 84.33/15.67 | 94.04/ 5.96 | $1.15 \times 10^{-2}$ | 2.93 |

Table 6

| Liquid composition (acetone/water, wt.%) | | P (g.m/m$^2$.hr) | $\alpha^{acetone}_{water}$ |
|---|---|---|---|
| Feed liquid | Permeated liquid | | |
| 8.12/91.88 | 80.02/19.92 | $4.82 \times 10^{-3}$ | 45.49 |
| 25.60/74.40 | 92.65/ 7.35 | $9.84 \times 10^{-3}$ | 36.63 |
| 39.81/60.19 | 93.04/ 6.96 | $1.16 \times 10^{-2}$ | 20.21 |

REFERENTIAL EXAMPLE 5

Synthesis 3 of polysiloxane having one reactive end:-

Polydimethylsiloxane having a structure represented by the following formula

$$CH_3-\overset{CH_3}{\underset{CH_3}{Si}}\!\left(O\overset{CH_3}{\underset{CH_3}{Si}}\right)_{\bar{m}}\!O-\overset{CH_3}{\underset{CH_3}{Si}}-H \quad (\bar{m} \doteqdot 8.4)$$

was produced by operating in the same way as in Referential Example 3 except that the amounts of trimethylsilanol, the hexane solution of n-butyllithium and the dimethylchlorosilane were changed to 5.4 g (0.060 mol), 38 ml (0.061 mol) and 20 ml (0.184 mol), respectively.

Furthermore, 24.0 g of the polydimethylsiloxane was subjected to hydrosilylation reaction with vinylchlorosilane as in Referential Example 3 to give about 25 g of polydimethylsiloxane having a dimethylchlorosilyl group at one end.

## EXAMPLE 6

By operating in the same way as in Example 4 except that 20 g (about 27 mmol) of the polydimethylsiloxane having a dimethylchlorosilyl group at one end obtained in Referential Example 5 was used instead of the polydimethylsiloxane having a dimethylchlorosilyl group at one end obtained in Referential Example 3, 1.33 g of poly(1-trimethylsilylpropyne)/polydimethylsiloxane graft copolymer having a structure resulting from substitution of a group of the formula

$$-\overset{CH_3}{\underset{CH_3}{Si}}CH_2CH_2\!\left(\overset{CH_3}{\underset{CH_3}{Si}}O\right)_{\bar{m}+1}\!\overset{CH_3}{\underset{CH_3}{Si}}-CH_3 \quad (\bar{m} \doteqdot 8.4)$$

for part of the hydrogen atoms on the methyl group directly bonded to the main-chain double bond of poly(1-trimethylsilylpropyne) was obtained. The IR spectrum of the copolymer was quite identical with that in Example 4,

but the intensity of absorption of the methyl group on the side-chain polydimethylsiloxane at 1260 $cm^{-1}$ and the characteristic absorption of the siloxane linkage at 1100 $cm^{-1}$ were stronger than those in Example 5. The elemental analysis values were as follows.

Elemental analysis values (%): C,60.23, H,10.27.

The mole ratio of the monomer units of the main-chain poly(1-trimethylsilylpropyne) and the monomer units of the side-chain dimethylsiloxane, calculated from the above carbon content, was 82:18. By GPC measurement, the copolymer was found to have a number average molecular weight, and a weight average molecular weight, of 5.71 x $10^5$ and 1.77 x $10^6$, respectively, calculated as polystyrene.

A uniform, transparent and tough membrane having a thickness of 15.4 micrometers was prepared from the resulting graft copolymer by the same method as in Example 4. The permeation characteristics of this membrane with respect to a water-ethanol mixture were measured with varying compositions of the feed liquid. The results are shown in Table 7.

Table 7

| Liquid composition (ethanol/water, wt.%) | | P ($g.m/m^2.hr$) | $\alpha$ ethanol/water |
|---|---|---|---|
| Feed liquid | Permeated liquid | | |
| 7.54/92.46 | 58.69/41.31 | $7.58x10^{-4}$ | 17.42 |
| 23.98/76.02 | 79.13/20.87 | $1.51x10^{-3}$ | 12.02 |
| 49.45/50.55 | 87.94/12.06 | $2.80x10^{-3}$ | 7.45 |
| 69.21/30.79 | 91.55/ 8.45 | $3.47x10^{-3}$ | 4.81 |

REFERENTIAL EXAMPLE 6

Synthesis 4 of polysiloxane having one reactive end:-

Polydimethylsiloxane having a structure represented by the following formula

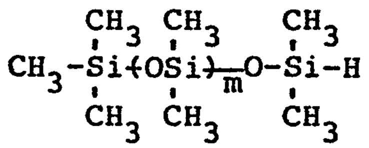 ($\bar{m} \doteq 11.4$)

was produced by operating in the same way as in Referential Example 3 except that the amounts of trimethylsilanol, the hexane solution of n-butyllithium and the dimethylchlorosilane were changed to 3.6 g (0.0399 mol), 25 ml (0.040 mol) and 30 ml (0.138 mol), respectively.

Furthermore, 27.2 g of the polydimethylsiloxane was subjected to hydrosilylation reaction with vinyldimethylchlorosilane as in Referential Example 3 to give about 28 g of polydimethylsiloxane having a dimethylchlorosilyl group at one end.

EXAMPLE 7

By operating in the same way as in Example 4 except that 20 g (about 20 mmol) of the polydimethylsiloxane having a dimethylchlorosilyl group at one end obtained in Referential Example 6 was used instead of the polydimethylsiloxane having a dimethylchlorosilyl group at one end obtained in Referential Example 3, 1.38 g of poly(1-trimethylsilylpropyne)/polydimethylsiloxane graft copolymer having a structure resulting from substitution of a group represented by the following formula

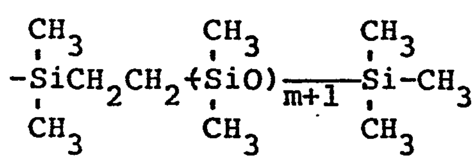 ($\bar{m} \doteq 11.4$)

for part of the hydrogen atoms of the methyl group directly bonded to the main-chain double bond of poly(1-trimethylsilylpropyne) was obtained. The IR spectrum of the copolymer was quite identical with that in Example 4, but the intensity of absorption of the methyl group on the side-chain polydimethylsiloxane at 1260 $cm^{-1}$ and the characteristic absorption of the siloxane linkage at 1100 $cm^{-1}$ were stronger than in Example 6. The elemental analysis values were as follows:-

Elemental analysis values (%): C,55.21, H,9.85

The mole ratio of the monomer units of the main-chain poly(1-trimethylsilylpropyne) to the monomer units of the side-chain polydimethylsiloxane, calculated from the above carbon content, was 63:37. By GPC measurement, the copolymer was found to have a number average molecular weight, and a weight average molecular weight, of $5.05 \times 10^5$ and $2.18 \times 10^6$, respectively.

A uniform, transparent and tough film having a thickness of 14.8 micrometers was prepared from the resulting graft copolymer in the same way as in Example 4. The results are shown in Table 8.

Table 8

| Liquid composition (ethanol/water, wt.%) | | P (g.m/m$^2$.hr) | $\alpha$ ethanol/water |
|---|---|---|---|
| Feed liquid | Permeated liquid | | |
| 12.68/87.32 | 66.78/33.22 | $7.01 \times 10^{-4}$ | 13.84 |
| 22.10/77.90 | 75.55/24.45 | $9.31 \times 10^{-4}$ | 10.89 |
| 43.32/56.68 | 83.76/16.24 | $1.30 \times 10^{-3}$ | 6.75 |
| 65.79/34.21 | 87.42/12.58 | $2.24 \times 10^{-3}$ | 3.61 |
| 84.84/15.16 | 95.09/ 4.91 | $4.48 \times 10^{-3}$ | 3.46 |

## REFERENTIAL EXAMPLE 7

Synthesis 5 of polysiloxane having one reactive end:-

Trimethylsilanol (3.90 g; 0.0432 mol) was dissolved in 200 ml of dry THF, and under a stream of argon gas, 29 ml (0.046 mol) of a hexane solution of n-butyllithium (1.6 mol/liter) was added. The mixture was stirred for 10 minutes. A solution of 36.2 g (0.488 mol) of hexamethylcyclotrisiloxane and 50.9 g (0.326 mol) of tris(3,3,3-trifluoropropyl)trimethylcyclotrisiloxane in 150 ml of dry THF was added. The mixture was stirred at room temperature for 20 hours in a stream of argon gas. As a terminating agent, 40 ml (0.367 mol) of dimethylchlorosilane was added to the resulting solution to stop the living polymerization. Then, the solvent was removed under reduced pressure, and the resulting salt was separated by filtration. The product was heated at 150°C under a vacuum of less than 0.1 mmHg for 3 hours to remove the unreacted cyclosiloxane and the excess of the terminating agent to give 78.3 g of a colorless transparent visous liquid. By IR and NMR spectral measurements, the polymer was determined to be polyorganosiloxane having a structure of the formula

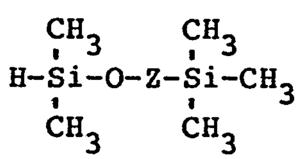

in which Z represents repeating units of the formulae

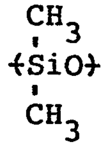 and 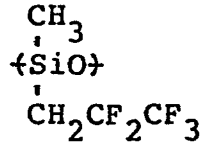 .

The mole ratio of the repeating units 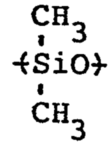 to the

repeating units $\begin{array}{c} CH_3 \\ | \\ \text{-(}SiO\text{)-} \\ | \\ CH_2CH_2CF_3 \end{array}$, based on the proton ratio in NMR, was 63:37. The polymer had an average degree of polymerization of 23.4.

By subjecting 50.0 g of the polyorganosiloxane to hydrosilylation with vinyldimethylchlorosilane as in Referential Example 3, about 51 g of polyorganosiloxane having a dimethylchlorosilyl group at one end was obtained.

EXAMPLE 8

By operating in the same way as in Example 4 except that 45 g (about 16 mmol) of the polyorganosiloxane having a dimethylchlorosilyl group at one end obtained in Referential Example 7 was used instead of the polydimethylsiloxane having a dimethylchlorosilyl group at one end obtained in Referential Example 3, there was obtained 1.41 g of poly[1-(trimethylsilyl)propyne]/polydimethylsiloxane graft copolymer having a structure resulting from substitution of a group represented by the following formula

$$\begin{array}{ccccc} CH_3 & & CH_3 & & CH_3 \\ | & & | & & | \\ -Si & CH_2CH_2 & SiO & -Z- & Si-CH_3 \\ | & & | & & | \\ CH_3 & & CH_3 & & CH_3 \end{array}$$

wherein Z is polyorganosiloxane composed of repeating units of the formulae

$$\begin{array}{c} CH_3 \\ | \\ \text{-(}SiO\text{)-} \\ | \\ CH_3 \end{array} \quad \text{and} \quad \begin{array}{c} CH_3 \\ | \\ \text{-(}SiO\text{)-} \\ | \\ CH_2CH_2CF_3 \end{array}$$

the mole ratio of the repeating units $\begin{array}{c} CH_3 \\ | \\ \text{-(}SiO\text{)-} \\ | \\ CH_3 \end{array}$ to

the repeating units $-(\underset{CH_2CH_2CF_3}{\overset{CH_3}{|}}\hspace{-0.5em}SiO)-$ is 63:37, and the average degree of polymerization is about 23.4,

for part of the hydrogen atoms on the methyl group directly bonded to the main-chain double bond of the poly[1-(trimethylsilyl)propyne]. The IR spectrum and elemental analysis values of the copolymer were as follows:-

IR spectrum ($cm^{-1}$): 2980 (s), 2920 (s), 1565 (s), 1433 (m), 1370 (m, the characteristic absorption of the methyl group on the main-chain polytrimethylsilylpropyne), 1260 (s, the characteristic absorption of the methyl group on the side-chain polysiloxane), 1250 (s, the characteristic absorption of the trimethylsilyl group on the main-chain polytrimethylsilylpropyne), 1210 (s, the characteristic absorption of the trifluoromethyl group), 1180 (m), 1130 (s, the characteristic absorption of the trifluoromethyl group), 1100 (s, the characterisic absorption of the siloxane linkage), 1020 (s), 915 (m), 840 (s), 800 (s), 750 (s), 740 (s), 685 (m), 635 (m).

Elemental analysis values (%): C,44.44, H,8.52

The mole ratio of the monomer units of the main-chain poly[1-(triethylsilyl)propyne] to the monomer units of the side-chain polyorganosiloxane, calculated from the carbon content found by elemental analysis, was 40:60. By GPC measurement, the copolymer was found to have a number average molecular weight, and a weight average molecular wight, of $4.83 \times 10^5$ and $2.11 \times 10^6$, respectively, calculated as polystyrene.

A uniform, transparent and tough membrane having a thickness of 16.2 micrometers was prepared from the resulting graft copolymer by the same method as in Example 4. The permeation characteristics of this membrane with respect to a water-ethanol mixture were measured with varying compositions of the feed liquid by the same method as in Example 1. The results are shown in Table 9.

Table 9

| Liquid composition (ethanol/water, wt.%) | | P $(g.m/m^2.hr)$ | $\alpha$ ethanol/water |
|---|---|---|---|
| Feed liquid | Permeated liquid | | |
| 6.49/93.51 | 52.02/47.98 | $4.54x10^{-4}$ | 15.62 |
| 16.27/83.73 | 67.23/32.77 | $7.07x10^{-4}$ | 10.56 |
| 30.27/69.73 | 81.27/18.73 | $1.36x10^{-3}$ | 9.99 |
| 52.89/47.11 | 87.23/12.77 | $1.97x10^{-3}$ | 6.08 |
| 71.74/28.26 | 90.91/ 9.09 | $3.09x10^{-3}$ | 3.94 |
| 84.12/15.76 | 93.76/ 6.24 | $3.29x10^{-3}$ | 2.81 |

EXAMPLE 9

The poly[1-(trimethylsilyl)propyne] (1.0 g; 8.90 mmol) obtained in Referential Example 2 was dissolved in 200 ml of THF, and in an argon stream, 6.0 ml (9.60 mmol) of a hexane solution of n-butyllithium (1.6 mol/liter) was added at 0°C to the solution, and the mixture was stirred for 1 hour. A solution of 2.1 g (28.3 mmol) of hexamethylcyclotrisiloxane in 15 ml of THF was added, and the mixture was stirred at 0°C for 3 hours. Then, 6 ml (47.6 mmol) of trimethylchlorosilane was added to stop the reaction. The reaction solution was then poured into 2 liters of methanol to form a precipitate. The precipiate was separated by filtration, dissolved in 200 ml of toluene and then poured into 2 liters of methanol to form a precipitate. The precipitate was purified by peforming re-precipitation several times in the same manner. The final precipitate was separated by filtration and dried to give 1.20 g of a white polymer. By GPC measurement, this polymer was found to have a number average molecular weight, and a weight average molecular weight, of 4.42 x

$10^5$ and $1.79 \times 10^6$, respectively, calculated as polystyrene. The IR spectrum of the polymer was nearly the same as that in Example 4. The elemental analysis values were as follows.

Elemental analysis values (%): C,63.26, H,10.68

The above results led to the determination that the resulting polymer was poly[1-(trimethylsilyl)propyne]/polydimethylsiloxane graft copolymer having a structure resulting from substitution of a group of the following formula

$$-\!\left(\begin{matrix}CH_3\\ |\\ SiO\\ |\\ CH_3\end{matrix}\right)_{\bar{m}}\!-\begin{matrix}CH_3\\ |\\ Si\\ |\\ CH_3\end{matrix}-CH_3 \quad (\bar{m} \doteqdot 3\text{-}9)$$

for part of the hydrogen atoms on the methyl group directly bonded to the main-chain double bond of the starting poly(1-trimethylsilylpropyne). The mole ratio of the monomer units of the main-chain poly[1-(trimethylsilyl)-propyne] to the monomer units of the side-chain polydimethylsiloxane, calculated from the carbon content of the elemental analysis values, was 94:6.

A uniform, transparent and tough membrane having a thickness of 12.4 micrometers was prepared from the resulting graft copolymer by the same method as in Example 4. The permeation characteristics of the membrane with respect to a water-ethanol mixture were measured with varying compositions of the feed liquid by the same method as in Example 1. The results are shown in Table 10.

Table 10

| Liquid composition (ethanol/water, wt.%) | | P (g.m/m$^2$.hr) | $\alpha$ ethanol/water |
|---|---|---|---|
| Feed liquid | Permeated liquid | | |
| 7.91/92.09 | 63.81/36.19 | $1.22 \times 10^{-4}$ | 20.53 |
| 22.51/77.49 | 80.86/19.14 | $2.29 \times 10^{-3}$ | 14.54 |
| 48.98/51.02 | 88.77/11.23 | $4.35 \times 10^{-3}$ | 8.23 |
| 71.59/28.41 | 92.09/ 7.91 | $7.45 \times 10^{-3}$ | 4.62 |

REFERENTIAL EXAMPLE 8

Synthesis of poly(1-trimethylsilylpropyne):-

28.4 g of 1-trimethylsilylpropyne was dissolved in 200 ml of toluene, and 1.6 g of tantalum pentachloride was added. After deaeration and sealing, the mixture was shaken at 80°C for 24 hours in a stainless steel polymerization tube to give a viscous gel-like polymer. The polymer was dissolved in toluene and precipitated several times from a large amount of methanol. The resulting white fibrous solid was dried in vacuum at 60°C. The amount of the product obtained was 27.2 g (yield 95.8%). By Infrared absorption (IR), $^1$H-NMR and $^{13}$C-NMR measurements and elemental analysis, the resulting polymer was determined to be the desired poly(1-trimethylsilylpropyne). By gel permeation chromatography (GPC), the polymer was found to have a number average molecular weight, and a weight average molecular weight, of $2.62 \times 10^5$ and $7.77 \times 10^5$, respectively, calculated as polystyrene.

REFERENTIAL EXAMPLE 9

Synthesis of vinyldimethylsilylated poly(1-trimethylsilylpropyne):-

The poly(1-trimethylsilylpropyne) obtained in Referential Example 8 (20.0 g) was dissolved in 1.2 liters of fully dehydrated tetrahydrofuran. The solution was cooled to 0°C in a stream of argon gas. Then, 50.0 ml of a hexane solution of n-butyllithium (1.6 mol/liter) was added. The mixture was stirred for 1 hour to give a red reaction solution.

Then, 25 ml of vinyldimethylchlorosilane was added, and the mixture was stirred at room temperature for 30 minutes. After confirming that the color of the reaction solution disappeared, the reaction solution was poured into 10 liters of methanol to precipitate a white polymer. The resulting polymer was dissolved in 1.0 liter of toluene and re-precipitated in 10 liters of methanol. Re-precipitation was repeated several times in the same way to purify the polymer. The amount of the final polymer obtained was 20.6 g.

By GPC measurement, the polymer was found to have a number average molecular weight, and a weight average molecular weight, of $2.14 \times 10^5$ and $7.45 \times 10^5$, respectively, calculated as polystyrene.

The results of IR spectrum and $^1$H-NMR spectrum measurements and elemental analysis of the resulting polymer were as follows.

IR spectrum ($cm^{-1}$): 2980 (s), 2920 (s), 1640 (w, the characteristic absorption of the vinyl group), 1565 (s), 1433 (m), 1370 (m), 1250 (s, the characteristic absorption of the methyl group on the silyl group), 1180 (m), 1030 (m), 1006 (m), 915 (m), 840 (s), 750 (s), 685 (m), 630 (m).

$^1$H-NMR spectrum, $\delta$ ($CDCl_3$, ppm): 0.10 (the proton peak of the methylene group and the methyl group on the silyl group), 1.70 (the proton peak of methyl groups other than the methyl group on the silyl group), 5.60 and 5.90 (the proton peak of the vinyl group).

Elemental analysis values (%): C,63.49, H,10.73.

The above results led to the determination that the resulting polymer was a divinyldimethylsilylated product of poly(1-trimethylsilylpropyne), which was composed of repeating units of the following formulae.

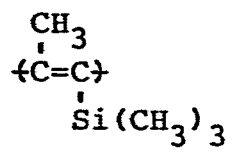 and 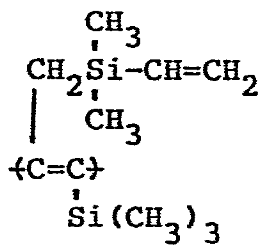

The mole ratio of the former repeating units to the latter repeating units, calculated from the carbon content in the elemental analysis values, was 85:15.

REFERENTIAL EXAMPLE 10

Synthesis of poly(1-trimethylsilylpropyne)/polydimethylsiloxane graft copolymer:-

The vinyldimethylsilylated poly(1-trimethylsilylpropyne) obtained in Referential Example 9 (4.0 g) was dissolved in 500 ml of fully dehydrated tetrahydrofuran, and the solution was cooled to $0^{o}C$ in a stream of argon gas. Then, 10.0 ml of a hexane solution of n-butyllithium (1.6 mol/liter) was added, and the solution was stirred for 1.5 hours. A solution of 41.2 g of hexamethylcyclotrisiloxane in 300 ml of fully dehydrated tetrahydrofuran was added at a time, and the mixture was stirred for 14 hours at room temperature. Furthermore, 40 ml of trimethylchlorosilane was added to stop the reaction. The reaction solution was poured into 5 liters of methanol to obtain a white polymer. The resulting polymer was dissolved in 500 ml of toluene, and purified by repeating re-precipitation from 5 liters of ethanol several times. The amount of the resulting polymer was 7.1 g.

The results of IR and $^{13}C$-NMR measurements and elemental analysis of the resulting polymer were as follows:-

IR spectrum ($cm^{-1}$): 2980 (s), 2920 (s), 1565 (s), 1433 (m), 1370 (m, the characteristic absorption of the methyl group on the main-chain polytrimethylsilylpropyne), 1260 (s, the characteristic absorption of the methyl group on the side-chain polydimethylsiloxane), 1250 (s, the characteristic absorpton of the trimethylsilyl group on the main-chain polytrimethylsilylpropyne), 1180 (m), 1100 (s, the characteristic absorption of the siloxane linkage), 1020 (s), 915 (m), 840 (s), 800 (s), 750 (s), 685 (m), 630 (m).

$^{13}$C-NMR spectrum ($CDCl_3$, δ ppm): 1.3 (the carbon peak of the methyl group on the side-chain polydimethylsiloxane), 2.2 (the carbon peak of the methylene group to which the side-chain polydimethylsiloxane is bonded), 3.2 (the carbon peak of the trimethylsilyl group on the main-chain polytrimethylsilylpropyne), 26.5 (the carbon peak of the methyl group on the main-chain polytrimethylsilylpropyne), 139.4 (the carbon peak of the main-chain skeleton of the main-chain polytrimethylsilylpropyne), and 151.8 (the carbon peak of the main-chain skeleton of the main-chain polytrimehylsilylpropyne).

Elemental analysis values (%): C,46.26, H,9.54.

By GPC measurement, this polymer was found to have a number average molecular weight, and a weight average molecular weight, of $2.57 \times 10^5$ and $8.20 \times 10^5$, respectively, calculated as polystyrene.

The above results led to the determination that the resulting polymer was poly(1-trimethylsilylpropyne)/polydimethylsiloxane graft copolymer in which the main chain is composed of poly(1-trimethylsilylpropyne) and the side-chain is composed of polydimethylsiloxane. The mole ratio of the repeating units of the main-chain poly(1-trimethylsilylpropyne) to the repeating units of the side-chain polydimethylsiloxane, calculated from the carbon content in the elemental analysis values, was 34:66. The graft copolymer had a softening temperature,

determined from temperature-dependent variations of its dynamic Young's modulus measured by thermomechanical analysis, of 210°C.

REFERENTIAL EXAMPLE 11

Synthesis of poly(1-trimethylsilylpropyne)/ polydimethylsiloxane graft copolymer:-

A white polymer (7.7 g) was obtained by operating in the same way as in Referential Example 10 except that the amount of hexamethylcyclotrisiloxane was changed to 51.8 g.

The IR and $^{13}C$-NMR spectra of the resulting polymer were the same as in Referential Example 10, and the results of its elemental analysis were as follows:-

Elemental analysis values (%): C,44.63; H,9.55.

By GPC measurement, this polymer was found to have a number average molecular weight, and a weight average molecular weight, of $2.65 \times 10^5$ and $8.45 \times 10^5$, respectively, calculated as polystyrene.

It was therefore determined that the resulting polymer was poly(1-trimethylsilylpropyne)/polydimethylsiloxane graft copolymer having the same structure as in Referential Example 10. The mole ratio of the repeating units of the main-chain poly(1-trimethylsilylpropyne) and the repeating units of the side-chain polydimethylsiloxane, calculated from the carbon content in the elemental analysis values, was 30:70. The copolymer had a softening temperature of 194°C.

REFERENTIAAL EXAMPLE 12

Synthesis of poly(1-phenylpropyne):-

44.3 g of 1-phenylpropyne was dissolved in 400 ml of toluene, and 2.7 g of tantalum pentachloride was added. In a stainless steel polymerization tube, the mixture was shaken at 80°C for 6 hours after deaeration and sealing. As a result, a viscous gel-like polymer was obtained. The polymer was dissolved in toluene, and precipitated from a large amount of methanol several

times. The resulting white fibrous solid was dried in vacuum at 60°C. The amount of the polymer obtained was 38.2 g (yield 86.2%). The resulting polymer was subjected to IR, $^{1}H$-NMR and $^{13}C$-NMR measurements and elemental analysis, and identified as the desired poly(1-phenylpropyne). By GPC measurement, it was found to have a number average molecular weight, and a weight average molecular weight, of $2.15 \times 10^5$ and $5.53 \times 10^5$, respectively, calculated as polystyrene.

REFERENTIAL EXAMPLE 13

Synthesis of vinyldimethylsilylated poly(1-phenylpropyne):-

A white polymer (10.2 g) was produced by operating in the same way as in Referential Example 9 except that 10.0 g of the poly(1-phenylpropyne) obtained in Referential Example 12 was used instead of the poly(1-trimethylsilylpropyne).

By GPC measurement, the polymer was found to have a number average molecular weight, and a weight average molecular weight, of $2.10 \times 10^5$ and $5.34 \times 10^5$, respectively, calculated as polystyrene.

The resulting polymer was subjected to IR and $^{1}H$-NMR spectral measurements and elemental analysis, and the results were as follows:-

IR spectrum ($cm^{-1}$): 3070 (s), 3040 (s), 2980 (s), 2950 (s), 2930 (s), 2860 (m), 1950 (w), 1880 (w), 1800 (w), 1600 (m), 1495 (s), 1438 (s), 1366 (s), 1250 (m, the characteristic absorption of the methyl group on the silyl group), 1180 (w), 1155 (w), 1090 (m), 1075 (m), 1030 (s), 905 (m), 838 (s), 820 (s), 770 (s), 700 (s), 620 (w).

$^{1}H$-NMR spectrum, $\delta$ ($CDCl_3$, pm): 0.28 (the proton peak of the methylene group and the methyl group on the silyl group), 1.38 (the proton peak of methyl groups other than the methyl group on the silyl group), 5.60 and 5.90 (the proton peaks of the vinyl group), 6.95 (the proton peak of the phenyl group).

Elemental analysis values (%): C,89.86, H,7.11.

The above results led to the determination that the resulting polymer was a vinyldimethylsilylated product of poly(1-phenylpropyne), which was composed of repeating units of the following formula.

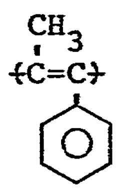
and
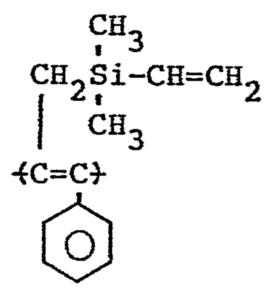

The mole ratio of the former repeating units to the latter repeating units, calculated from the carbon content of the elemental analysis values, was 87:13.

REFERENTIAL EXAMPLE 14

Synthesis 1 of poly(1-phenylpropyne)/polydimethylsiloxane graft copolymer:-

3.0 g of the vinyldimethylsilylated poly(1-phenylpropyne) obtained in Referential Example 13 was dissolved in 500 ml of fully dehydrated tetrahydrofuran. The solution was cooled to $0^{o}C$ in a stream of argon gas. Then, 10.0 ml of a hexane solution of n-butyllithium (1.6 mol/liter) was added, and the mixture was further stirred for 2 hours. Then, a solution of 51.8 g of hexamethylcyclotrisiloxane in 300 ml of fully dehydrated tetrahydrofuran was added to the solution at a time, and the mixture was stirred at room temperature for 18 hours. Furthermore, 40 ml of trimethylchlorosilane was added to stop the reaction. The reaction solution was poured into 5 liters of methanol to give a white polymer. The resulting polymer was dissolved in 500 ml of toluene, and purified by re-precipitation from 5 liters of ethanol several times. The amount of the polymer yielded was 5.3 g.

The resulting polymer was subjected to IR and

$^1H$-NMR spectral measurements and elemental analysis, and the results were as follows:-

IR spectrum ($cm^{-1}$): 3100 (m), 3070 (s), 3040 (m), 2980 (s), 2920 (s), 2860 (m), 1950 (w), 1890 (w), 1800 (w), 1600 [s, the characteristic absorption of the phenyl group of the main-chain poly(1-phenylpropyne)], 1500 (s), 1440 (s), 1415 (m), 1370 (s), 1260 (s, the characteristic absorption of the methyl group of the side-chain polydimethylsiloxane), 1100 (s, the characteristic absorption of the siloxane linkage), 1020 (s, the characteristic absorption of the siloxane linkage), 910 (w), 860 (s), 800 (s), 770 (s), 695 (s).

$^1H$-NMR spectrum, $\delta$ ($CDCl_3$, ppm): 0.10 (the proton peak of the methyl group of the side-chain polydimethylsiloxane), 1.60 [the proton peak of the methyl group of the main-chain poly(1-phenylpropyne)], 6.90 [the proton peak of the phenyl group of the main-chain poly(1-phenylpropyne)].

Elemental analysis values (%): C,61.27, H,7.91.

By GPC measurement, this polymer was found to have a number average molecular weight, and a weight average molecular weight, of $2.31 \times 10^5$ and $5.91 \times 10^5$, respectively, calculated as polystyrene.

The above results led to the determination that the resulting polymer was poly(1-phenylpropyne)/polydimethylsiloxane graft copolymer in which the main chain is composed of poly(1-phenylpropyne) and the side chain is composed of polydimethylsiloxane. The mole ratio of the repeating units of the main-chain poly(1-phenylpropyne) to the repeating units of the side-chain polydimethylsiloxane, calculated from the carbon content in the elemental analysis values, was 44:56. The copolymer had a softening temperature of 135°C.

REFERENTIAL EXAMPLE 15

Synthesis 2 of poly(1-phenylpropyne)/polydimethylsiloxane graft copolymer:-

A white polymer (6.4 g) was prepared by operating in the same way as in Referential Example 14 except that the amount of hexamethylcyclotrisiloxane was changed to 62.4 g.

The IR and $^{13}$C-NMR spectra of the resulting polymer were the same as in Referential Example 14, and the results of its elemental analysis were as follows:-

Elemental analysis values (%): C,56.48, H,7.52.

By GPC measurement, the polymer was found to have a number average molecular weight, and a weight average molecular weight, of 2.45 x $10^5$ and 6.11 x $10^5$, respectively, calculated as polystyrene.

It was determined therefore that the resulting polymer was poly(1-phenylpropyne)/polydimethylsiloxane graft copolymer having the same structure as that in Referential Example 14. The mole ratio of the repeating units of the main-chain poly(1-phenylpropyne) to the repeating units of the side-chain polydimethylsiloxane, calculated from the carbon content, was 29:71. The copolymer had a softening temperature of 115°C.

## EXAMPLES 10-13

Results of water/ethanol permeation test:-

Each of the graft copolymers obtained in Referential Examples 10, 11, 14 and 15 was dissolved in toluene, and cast on a Teflon plate, and toluene was slowly evaporated to form a uniform, transparent and tough membrane having a thickness of 20 to 30 micrometers. The resulting membrane was inserted into a pervaporation cell, and the permeate side of the cell was maintained under a reduced pressure of 0.5 mmHg. A water/organic liquid mixture was permeated through the membrane. The composition of the mixture which permeated through the membrane was detected by TCD-gas chromatography, and then the permeation velocity P (g.m/$m^2$.hr) and selectivity were calculated from the equations given hereinabove.

The permeation test was conducted several times

with varying compositions of the feed liquid, and P and α were determined in each case. The results of measurement are shown in Tables 11 to 14.

Table 11

(The membrane prepared from the copolymer of Referential Example 10)

| Liquid composition (ethanol/water, wt.%) | | P ($g.m/m^2.hr$) | $\alpha^{ethanol}_{water}$ |
|---|---|---|---|
| Feed liquid | Permeated liquid | | |
| 6.19/93.81 | 58.05/41.95 | $1.24x10^{-3}$ | 20.97 |
| 15.86/84.14 | 70.54/29.46 | $2.43x10^{-3}$ | 12.70 |
| 34.04/65.96 | 83.61/16.39 | $3.74x10^{-3}$ | 9.88 |
| 54.56/45.44 | 87.94/12.06 | $5.06x10^{-3}$ | 6.07 |
| 76.07/23.93 | 92.36/ 7.64 | $7.17x10^{-3}$ | 3.80 |

Table 12

(The membrane prepared from the copolymer of Referential Example 12)

| Liquid composition (ethanol/water, wt.%) | | P ($g.m/m^2.hr$) | $\alpha^{ethanol}_{water}$ |
|---|---|---|---|
| Feed liquid | Permeated liquid | | |
| 6.68/93.32 | 60.03/39.97 | $7.23x10^{-4}$ | 20.98 |
| 14.47/85.53 | 76.85/23.15 | $1.33x10^{-3}$ | 19.62 |
| 31.00/69.00 | 87.02/12.98 | $3.06x10^{-3}$ | 14.92 |
| 51.17/48.83 | 90.94/ 9.06 | $3.65x10^{-3}$ | 9.58 |
| 71.10/28.90 | 93.62/ 6.38 | $3.83x10^{-3}$ | 5.96 |

Table 13

(The membrane prepared from the copolymer of Referential Example 14)

| Liquid composition (ethanol/water, wt.%) | | P ($g.m/m^2.hr$) | $\alpha$ ethanol water |
|---|---|---|---|
| Feed liquid | Permeated liquid | | |
| 6.51/93.49 | 50.45/49.55 | $1.84x10^{-4}$ | 14.62 |
| 9.92/90.08 | 62.43/37.57 | $2.77x10^{-4}$ | 15.09 |
| 24.33/75.67 | 79.30/20.70 | $4.81x10^{-4}$ | 11.91 |
| 47.57/52.43 | 82.46/17.54 | $6.91x10^{-4}$ | 5.18 |
| 77.16/22.84 | 92.09/ 7.91 | $1.29x10^{-3}$ | 3.45 |

Table 14

(The membrane prepared from the copolymer of Referential Example 15)

| Liquid composition (ethanol/water, wt.%) | | P ($g.m/m^2.hr$) | $\alpha$ ethanol water |
|---|---|---|---|
| Feed liquid | Permeated liquid | | |
| 7.21/92.79 | 55.92/44.08 | $5.98x10^{-4}$ | 16.33 |
| 14.02/85.98 | 71.50/28.50 | $7.73x10^{-4}$ | 15.39 |
| 31.35/68.65 | 84.13/15.87 | $1.39x10^{-3}$ | 11.61 |
| 49.32/50.68 | 86.51/13.49 | $2.21x10^{-3}$ | 6.59 |
| 78.49/21.51 | 87.44/12.56 | $2.25x10^{-3}$ | 1.91 |

REFERENTIAL EXAMPLE 16

Synthesis 1 of polydimethylsiloxane having a Si-H linkage at one end:-

Trimethylsilanol (7.2 g; 0.157 mol) was dissolved in 200 ml of dry THF, and in a stream of argon gas, 50.0 ml of a hexane solution of n-butyllithium (1.6 mol/liter) was added to the solution. The mixture was stirred for 10 minutes, and a solution of 93.4 g of hexamethylcyclotrisiloxane in 200 ml of THF was added. The mixture was stirred at room temperature for 21 hours in a stream of argon gas. As a terminating agent, 30.0 ml of dimethylchlorosilane was added to the solution to stop the living polymerization.

The solvent was then removed under reduced pressure. The resulting salt was separated by filtration, and the product was heated at 150°C under a vacuum of less than 0.1 mmHg for 3 hours to remove the unreacted cyclosiloxane and the excess of the terminating agent. There was obtained 102.4 g of a colorless transparent viscous liquid. The resulting polymer was subjected to IR and NMR spectral measurements, and identified as a polymer having the following structure.

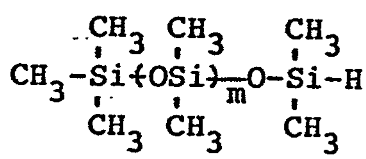

The polymer had an average degree of polymerization, $\bar{m}$, on the basis of the proton ratio in NMR, of about 20.8.

REFERENTIAL EXAMPLE 17

Synthesis 1 of poly(1-trimethylsilylpropyne)/polydimethylsiloxane graft copolymer:-

3.0 g of the vinyldimethylsilylated poly(1-trimethylsilylpropyne) obtained in Referential Example 9 and 3.0 g of polydimethylsiloxane having a Si-H linkage at

one end obtained in Referential Example 16 were dissolved in 300 ml of toluene, and 60 microliters of an isopropanol solution of chloroplatinic acid (0.1 mol/liter) was added in a stream of argon. The mixture was stirred at 80°C for 18 hours. Then, the reaction solution was poured into 3 liters of methanol to give a white polymer. The resulting polymer was dissolved in 300 ml of toluene, and purified by performing re-precipitation from 4 liters of ethanol several times. The amount of the polymer obtained was 4.2 g.

The resulting polymer was subjected to IR and $^{13}$C-NMR spectral measurements and elemental analysis, and the results were as follows:-

IR spectrum ($cm^{-1}$): 2980 (s), 2920 (s), 1565 (s), 1433 (m), 1370 (m, the characteristic absorption of the methyl group on the main-chain polytrimethylsilylpropyne), 1260 (s, the characteristic absorption of the methyl group on the side-chain polydimethylsiloxane), 1250 (s, the characteristic absorption of the trimethylsilyl group on the main-chain polytrimethylsilylpropyne), 1180 (m), 1100 (s, the characteristic absorption of the siloxane linkage), 1020 (s), 915 (m), 840 (s), 800 (s), 750 (s), 685 (m), 630 (m).

$^{13}$C-NMR spectrum ($CDCl_3$, δ ppm): 1.3 (the carbon peak of the methyl group on the side-chain polydimethylsiloxane), 2.2 (the carbon peak of the methylene group to which the side-chain polydimethylsiloxane is bonded), 3.2 (the carbon peak of the trimethylsilyl group on the main-chain polytrimethylsilylpropyne), 26.5 (the carbon peak of the methyl group on the main-chain polytrimethylsilylpropyne), 139.4 (the carbon peak of the main-chain skeleton of the main-chain polytrimethylsilylpropyne), 151.8 (the carbon peak of the main-chain skeleton of the main-chain polytrimethylsilylpropyne).

Elemental analysis values (%): C,51.27, H,9.89

By GPC measurement, the polymer was found to

have a number average molecular weight, and a weight average molecular weight, of $2.33 \times 10^5$ and $7.52 \times 10^5$, respectively, calculated as polystyrene.

The above results led to the determination that the resulting polymer was poly(1-trimethylsilylpropyne)/polydimethylsiloxane graft copolymer in which the main chain is composed of poly(1-trimethylsilylpropyne) and the side chain is composed of polydimethylsiloxane. The mole ratio of the repeating units of the main-chain poly(1-trimethylsilylpropyne) to the repeating units of the side-chain polydimethylsiloxane, calculated from the carbon content in the elemental analysis values, of 49:51. The copolymer had a softening temperature, determined from temperature-dependent variations of its dynamic Young's modulus measured by thermomechanical analysis, of 230°C.

REFERENTIAL EXAMPLE 18

Synthesis 2 of polydimethylsiloxane having a Si-H linkage at one end:-

By operating in the same way as in Referential Example 16 except that the amounts of trimethylsilanol, the hexane solution of n-butyllithium and dimethylchlorosilane were changed to 3.7 g, 26 ml, and 20 ml, respectively, 97.8 g of polydimethylsiloxane having the following structure

$$CH_3-\overset{CH_3}{\underset{CH_3}{Si}}\!\!-\!\!(O\overset{CH_3}{\underset{CH_3}{Si}})_{m}\!-O-\overset{CH_3}{\underset{CH_3}{Si}}-H \quad (\bar{m} \doteqdot 40.8)$$

was obtained.

REFERENTIAL EXAMPLE 19

Synthesis 2 of poly(1-trimethylsilylpropyne)/polydimethylsiloxane:-

A white polymer (4.5 g) was obtained by operating in the same way as in Referential Example 17 except that 4.0 g of the polydimethylsiloxane obtained in Referential Example 18 was used instead of the polydimethylsiloxane obtained in Referential Example 16.

The IR and $^{13}C$-NMR spectra of the resulting polymer were the same as those in Referential Example 17, and its elemental analysis values were as follows:-

Elemental analysis values (%): C,46.35, H,9.28.

By GPC measurement, the polymer was found to have a number average molecular weight, and a weight average molecular weight, of $2.83 \times 10^5$ and $7.77 \times 10^5$, respectively, calculated as polystyrene.

It was determined therefore that the resulting polymer was poly(1-trimethylsilylpropyne)/polydimethylsiloxane graft copolymer having the same structure as in Referential Example 17. The mole ratio of the repeating units of the main-chain poly(1-trimethylsilylpropyne) to the repeating units of the side-chain polydimethylsiloxane, calculated from the carbon content in the elemental analysis values, was 34:66. The polymer had a softening temperature of 207°C.

REFERENTIAL EXAMPLE 20

Synthesis 3 of polydimethylsiloxane having a Si-H linkage at one end:-

By operating in the same way as in Referential Example 16 except that the amounts of trimethylsilanol, the hexane solution of n-butyllithium, and dimethylchlorosilane were changed to 1.8 g, 15 ml, and 18 ml (0.275 mol) respectively, 96.4 g of polydimethylsiloxane having the following structure

$$CH_3-\overset{CH_3}{\underset{CH_3}{Si}}\left(O\overset{CH_3}{\underset{CH_3}{Si}}\right)_{m}O-\overset{CH_3}{\underset{CH_3}{Si}}-H \quad (\bar{m} \doteqdot 82.0)$$

was obtained.

REFERENTIAL EXAMPLE 21

Synthesis 3 of poly(1-trimethylsilylpropyne)/polydimethylsiloxane graft copolymer:-

A white polymer (5.2 g) was prepared by operating in the same way as in Referential Example 17 except

that 5.0 g of the polydimethylsiloxane obtained in Referential Example 20 was used instead of the polydimethylsiloxane obtained in Referential Example 16.

The IR and $^{13}C$-NMR spectra of the resulting polymer were the same as in Referential Example 17, and the results of its elemental analysis were as follows:-

Elemental analysis values (%): C,43.49, H,9.31.

By GPC measurement, the polymer was found to have a number average molecular weight, and a weight average molecular weight, of $3.84 \times 10^5$ and $8.01 \times 10^5$, respectively, calculated as polystyrene.

It was determined therefore that the resulting polymer was poly(1-trimethylsilylpropyne)/polydimethylsiloxane graft copolymer having the same structure as in Referential Example 17. The mole ratio of the repeating units of the main-chain poly(1-trimethylsilylpropyne) to the repeating units of the side-chain polydimethylsiloxane, calculated from the carbon content of the elemental analysis values, was 26:74. The copolymer had a softening point of 181°C.

REFERENTIAL EXAMPLE 22

Synthesis of poly(1-phenylpropyne)/polydimethylsiloxane graft copolymer:-

3.0 g of the vinyldimethylsilylated poly(1-phenylpropyne) obtained in Referential Example 13 and 4.0 g of the polydimethylsiloxane having a Si-H linkage at one end obtained in Referential Example 4 were dissolved in 300 ml of toluene, and in a stream of argon, 260 microliters of an isopropanol solution of chloroplatinic acid (0.1 mol/liter) was added. The mixture was stirred at 80°C for 18 hours. Then, the reaction solution was poured into 3 liters of methanol to obtain a white polymer. The resulting polymer was dissolved in 300 ml of toluene, and purified by repeating re-precipitation from 4 liters of ethanol. The amount of the polymer obtained was 4.5 g.

The resulting polymer was subjected to IR and

$^1$H-NMR spectral measurements and elemental analysis, and the results obtained were as follows:-

IR spectrum ($cm^{-1}$): 3100 (m), 3070 (s), 3040 (m), 2980 (s), 2920 (s), 2860 (m), 1950 (w), 1890 (w), 1800 (w), 1600 [s, the characteristic absorption of the phenyl group of the main-chain poly(1-phenylpropyne)], 1500 (s), 1440 (s), 1415 (m), 1370 (s), 1260 (s, the characteristic absorption of the methyl group of the side-chain polydimethylsiloxane), 1100 (s, the characteristic absorption of the siloxane linkage), 1020 (s, the characteristic absorption of the siloxane linkage), 910 (w), 860 (s), 800 (s), 770 (s), 695 (s).

$^1$H-NMR spectrum, δ ($CDCl_3$, ppm): 0.10 (the proton peak of the methyl group of the side-chain polydimethylsiloxane), 1.60 [the proton peak of the methyl group of the main-chain poly(1-phenylpropyne)], 6.90 [the proton peak of the phenyl group of the main-chain poly(1-phenylpropyne)].

Elemental analysis values (%): C,62.70, H,7.74.

By GPC measurement, the polymer was found to have a number average molecular weight, and a weight average molecular weight, of $2.45 \times 10^5$ and $5.80 \times 10^5$, respectively, calculated as polystyrene.

The above results led to the determination that the resulting polymer was poly(1-phenylpropyne)/polydimethylsiloxane graft copolymer in which the main chain is composed of poly(1-phenylpropyne) and the side chain is composed of polydimethylsiloxane. The mole ratio of the repeating units of the main-chain poly(1-phenylpropyne) to the repeating units of the side-chain polydimethylsiloxane, calculated from the carbon content of the elemental analysis values, was 39:61. The copolymer had a softening temperature of 131°C.

EXAMPLES 14-17

Results of water/ethanol permeation test:-

Each of the graft copolymers obtained in Refer-

ential Examples 17, 19, 21 and 22 was dissolved in toluene, and cast on a Teflon plate, and toluene was slowly evaporated to form a uniform, transparent and tough membrane having a thickness of 20 to 30 micrometers. The resulting membrane was inserted into a pervaporation cell, and the permeate side of the cell was maintained under a reduced pressure of 0.5 mmHg. A water/ethanol mixture was permeated through the membrane. The composition of the mixture which permeated through the membrane was detected by TCD-gas chromatography, and then the permeation velocity P ($g.m/m^2.hr$) and selectivity α were calculated from the equations given hereinabove.

The permeation test was conducted several times with varying compositions of the feed liquid, and P and α were determined in each case. The results of measurement are shown in Tables 15 to 18.

Table 15 (Example 14)

| Liquid composition (ethanol/water, wt.%) | | P ($g.m/m^2.hr$) | $\alpha$ ethanol/water |
|---|---|---|---|
| Feed liquid | Permeated liquid | | |
| 7.10/92.90 | 69.84/30.16 | $2.44 \times 10^{-4}$ | 30.30 |
| 17.22/82.78 | 82.21/17.79 | $5.76 \times 10^{-4}$ | 22.21 |
| 36.98/63.02 | 91.21/ 8.79 | $7.81 \times 10^{-4}$ | 17.68 |
| 56.54/43.46 | 90.99/ 9.01 | $1.36 \times 10^{-3}$ | 7.76 |
| 78.19/21.81 | 93.34/ 6.66 | $1.89 \times 10^{-3}$ | 3.91 |

Table 16 (Example 15)

| Liquid composition (ethanol/water, wt.%) | | P ($g.m/m^2.hr$) | $\alpha^{ethanol}_{water}$ |
|---|---|---|---|
| Feed liquid | Permeated liquid | | |
| 6.52/93.48 | 63.84/36.16 | $2.59 \times 10^{-4}$ | 25.31 |
| 15.22/84.78 | 84.37/15.63 | $6.25 \times 10^{-4}$ | 30.07 |
| 33.99/66.01 | 91.00/ 9.00 | $1.07 \times 10^{-3}$ | 19.64 |
| 55.09/44.91 | 93.20/ 6.80 | $1.50 \times 10^{-3}$ | 11.17 |
| 75.51/24.49 | 95.13/ 4.87 | $2.04 \times 10^{-3}$ | 6.34 |

Table 17 (Example 16)

| Liquid composition (ethanol/water, wt.%) | | P ($g.m/m^2.hr$) | $\alpha^{ethanol}_{water}$ |
|---|---|---|---|
| Feed liquid | Permeated liquid | | |
| 7.34/92.66 | 61.44/38.56 | $6.71 \times 10^{-4}$ | 20.11 |
| 13.16/86.84 | 75.53/24.47 | $1.07 \times 10^{-3}$ | 20.37 |
| 31.74/68.26 | 87.46/12.54 | $1.89 \times 10^{-3}$ | 15.00 |
| 51.49/48.51 | 91.09/ 8.91 | $2.54 \times 10^{-3}$ | 9.63 |
| 70.87/29.13 | 93.34/ 6.66 | $3.91 \times 10^{-3}$ | 7.74 |

Table 18 (Example 16)

| Liquid composition (ethanol/water, wt.%) | | P (g.m/$m^2$.hr) | $\alpha^{ethanol}_{water}$ |
|---|---|---|---|
| Feed liquid | Permeated liquid | | |
| 6.50/93.50 | 58.54/41.46 | $3.68x10^{-4}$ | 20.31 |
| 10.01/89.99 | 67.54/32.46 | $5.44x10^{-4}$ | 18.71 |
| 25.21/74.79 | 82.40/17.60 | $9.62x10^{-4}$ | 13.89 |
| 49.21/50.79 | 88.63/11.37 | $1.38x10^{-3}$ | 8.05 |
| 75.23/24.77 | 94.01/ 5.99 | $2.58x10^{-3}$ | 5.17 |

It is seen from the foregoing that the polymeric membranes formed from the graft copolymers of this invention have excellent selective permeability to ethanol in the permeation of a water/ethanol mixture.

COMPARATIVE EXAMPLE

A uniform, transparent and tough membrane having a thickness of 17.3 micrometers was prepared from the poly[1-(trimethylsilyl)propyne] obtained in Referential Example 2 in the same way as in Example 4. The permeation characteristics of this membrane with respect to a water-ethanol mixture were measured as in Example 1 with varying compositions of the feed liquid. The results are shown in Table 19.

Table 19

| Liquid composition (ethanol/water, wt.%) | | P $(g.m/m^2.hr)$ | $\alpha^{ethanol}_{water}$ |
|---|---|---|---|
| Feed liquid | Permeated liquid | | |
| 7.49/92.51 | 47.59/52.41 | $1.16x10^{-3}$ | 11.21 |
| 31.37/68.63 | 73.66/26.34 | $2.44x10^{-3}$ | 6.12 |
| 50.21/49.79 | 80.53/19.47 | $3.32x10^{-3}$ | 4.10 |
| 67.88/32.12 | 85.74/14.26 | $5.34x10^{-3}$ | 2.85 |
| 86.13/13.87 | 90.09/ 9.91 | $6.39x10^{-3}$ | 1.46 |

**Possibility of Utilization in Industry**

The separating polymeric membrane of this invention can be formed in a small thickness since it has higher strength than a conventional silicone rubber membrane. Furthermore, since it has excellent selective permeability to liquids, it can be used advantageously in industry for separation or concentration of various liquid mixtures such as a water-alcohol mixture.

**What is claimed is:**

1. A polymeric membrane for separation of a liquid mixture, said membrane being formed from a poly(disubstituted acetylene)/polyorganosiloxane graft copolymer having a molecular weight of at least 10,000 and composed of repeating units of the general formula

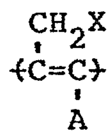

..... (I)

wherein A represents an alkyl group, a substituted alkyl group, a phenyl group, a substituted phenyl group, or a group of the formula

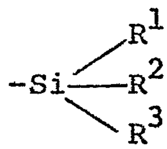

,

X represents a hydrogen atom or a group of the formla

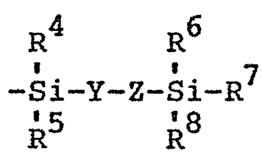

,

A and X may vary from unit to unit, Y represents an oxygen atom or a divalent organic group, Z represents a polyorganosiloxane chain, and $R^1$ through $R^8$ are identical or different and each represents an alkyl group, a substituted alkyl group, a phenyl group or a substituted phenyl group,

the mole ratio of the repeating units of the poly(disubstituted acetylene) in the main chain to the repeating units of the polyorganosiloxane in the side chain being from 99:1 to 5:95.

2. The polymeric membrane set forth in claim 1 wherein A is a group of the formula 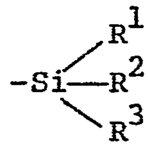, and the mole ratio of the repeating units of the poly(disubstituted acetylene) in the main chain to the repeating units of the polyorganosiloxane in the side chain is from 98:2 to 20:80.

3. The polymeric membrane set forth in claim 1 wherein A represents an alkyl group, a substituted alkyl group, a phenyl group or a substituted phenyl group, and the mole ratio of the repeating units of the poly(disubstituted acetylene) in the main chain to the repeating units of the polyorganosiloxane in the side chain is from 60:40 to 5:95.

4. The polymeric membrane set forth in claim 1 wherein the copolymer has a molecular weight of at least 50,000.

5. The polymeric membrane set forth in claim 1 which has a thickness of 0.05 to 100 micrometers.

6. The polymeric membrane set forth in claim 1 wherein the divalent organic group represented by Y is a phenylenepolymethylene group or a group of the formula

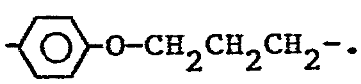.

7. The polymeric membrane set forth in claim 1 wherein the organosiloxane chain represented by Z is composed of repeating units represented by the general formula

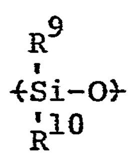

wherein $R^9$ and $R^{10}$ are identical or different and each represents an alkyl group, a substituted alkyl group, a phenyl group or a substituted phenyl group, and they may vary from unit to unit.

# INTERNATIONAL SEARCH REPORT

International Application No. PCT/JP86/00580

**I. CLASSIFICATION OF SUBJECT MATTER** (if several classification symbols apply, indicate all) [3]

According to International Patent Classification (IPC) or to both National Classification and IPC

Int.Cl$^4$ B01D13/00, B01D13/04

**II. FIELDS SEARCHED**

Minimum Documentation Searched [4]

| Classification System | Classification Symbols |
|---|---|
| IPC | B01D13/00-13/04, B01D53/22 |

Documentation Searched other than Minimum Documentation to the Extent that such Documents are Included in the Fields Searched [5]

| | |
|---|---|
| Jitsuyo Shinan Koho | 1971 - 1986 |
| Kokai Jitsuyo Shinan Koho | 1971 - 1986 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | JP, A, 60-143815 (Shin-Etsu Chemical Co., Ltd.) 30 July 1985 (30. 07. 85) Claim (Family: none) | 1 |
| P | JP, A, 61-220703 (Kogyo Gijutsuin-cho) 1 October 1986 (01. 10. 86) Claim (Family: none) | 1 |
| P | JP, A, 61-230705 (Kogyo Gijutsuin-cho) 15 October 1986 (15. 10. 86) Claim and page 2, lower right column to page 3, upper left column (Family: none) | 1, 3, 4, 5 |

* Special categories of cited documents: [15]
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance: the claimed invention cannot be considered novel or cannot be considered to involve an inventive step
- "Y" document of particular relevance: the claimed invention cannot be considered to involve an inventive step when the document is combined with one or more other such documents, such combination being obvious to a person skilled in the art
- "&" document member of the same patent family

**IV. CERTIFICATION**

| Date of the Actual Completion of the International Search [2] | Date of Mailing of this International Search Report [2] |
|---|---|
| January 20, 1987 (20.01.87) | February 2, 1987 (02. 02. 87) |
| **International Searching Authority** [1] | **Signature of Authorized Officer** [20] |
| Japanese Patent Office | |